# EUROPÄISCHE PATENTSCHRIFT

(11) **EP 1 140 847 B1**
(45) Veröffentlichungstag und Bekanntmachung des Hinweises auf die Patenterteilung: **18.12.2002**
(21) Anmeldenummer: 00901515.7
(22) Anmeldetag: 08.01.2000
(51) Int. Cl.: C07D 213/65, A01N 43/40

(54) **SUBSTITUIERTE 2-PHENYLPYRIDINE ALS HERBIZIDE**
SUBSTITUTED 2-PHENYLPYRIDINES AS HERBICIDES
2-PHENYLPYRIDINES SUBSTITUEES UTILISEES COMME HERBICIDES

(30) Priorität: 15.01.1999 DE 19901259
(43) Veröffentlichungstag der Anmeldung: 10.10.2001
(73) Patentinhaber: BASF AKTIENGESELLSCHAFT, 67056 Ludwigshafen (DE)
(72) Erfinder: MENKE, Olaf, D-67317 Altleiningen (DE); MENGES, Markus, D-64625 Bensheim (DE); SAGASSER, Ingo, D-69214 Eppelheim (DE); HAMPRECHT, Gerhard, D-69469 Weinheim (DE); REINHARD, Robert, D-67061 Ludwigshafen (DE); ZAGAR, Cyrill, D-67061 Ludwigshafen (DE); WESTPHALEN, Karl-Otto, D-67346 Speyer (DE); OTTEN, Martina, D-67069 Ludwigshafen (DE); WALTER, Helmut, D-67283 Obrigheim (DE)
(86) Internationale Anmeldenummer: EP0000095
(87) Internationale Veröffentlichungsnummer: WO00042015

(56) Entgegenhaltungen:
- WO-A-98/07700
- US-A- 5 529 976

## Beschreibung

Die vorliegende Erfindung betrifft neue substituierte 2-Phenylpyridine der Formel I 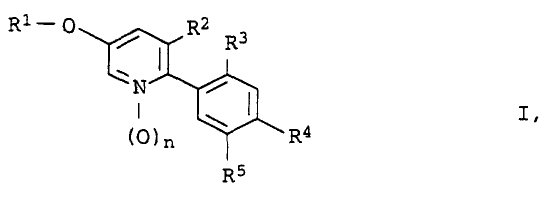 in der die Variablen folgende Bedeutungen haben:
- n: Null oder 1;
- R¹: Aminosulfonyl, C₁-C₆-Alkylsulfinyl, C₁-C₆-Alkylsulfonyl oder C₁-C₆-Halogenalkylsulfonyl;
- R²,R³: unabhängig voneinander Wasserstoff oder Halogen;
- R⁴: Cyano, Hydroxy, Halogen, C₁-C₆-Alkoxy oder Phenylmethoxy, wobei der Phenylring unsubstituiert sein oder ein bis drei Substituenten tragen kann, jeweils ausgewählt aus der Gruppe bestehend aus Hydroxy, Halogen, C₁-C₆-Alkyl, C₁-C₆-Halogenalkyl, C₁-C₆-Alkoxy, C₁-C₆-Halogenalkoxy, Hydroxycarbonyl, (C₁-C₆-Alkoxy)carbonyl und (C₁-C₆-Alkoxy)-carbonyl-C₁-C₆-alkoxy;
- R⁵: Wasserstoff, Nitro, Cyano, Hydroxylamino, Halogen, C₁-C₆-Alkyl, C₁-C₆-Halogenalkyl, -COCl, -CO-OR⁶, -CO-N(R⁷)R⁸, -CO-O-(C₁-C₄-Alkylen)-CO-OR⁶, -CO-O-(C₁-C₄-Alkylen)-CO-N(R⁷)R⁸, -X¹-(C₁-C₄-Alkylen)-CO-R⁶, -X¹-(C₁-C₄-Alkylen)-CO-OR⁶, -X¹-(C₁-C₄-Alkylen)-CO-O-(C₁-C₄-Alkylen)-CO-OR⁶, -X¹-(C₁-C₄-Alkylen)-CO-N(R⁷)R⁸, -X¹-R⁹, -CH=C(R¹⁰)-CO-OR⁶, -CH=C(R¹⁰)-CO-O-(C₁-C₄-Alkylen)-CO-OR⁶, -CH=C(R¹⁰)-CO-N(R⁷)R⁸, Formyl, -CO-R⁶, 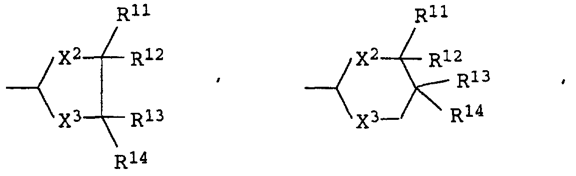 -C(R⁸)=N-OR¹⁵, -X¹-(C₁-C₄-Alkylen)-C(R⁸)=N-OR¹⁵, -CH=C(R¹⁰)-C(R⁸)=N-OR¹⁵, -CH(C₁-C₆-Alkoxy)₂, -N(R¹⁶)R¹⁷,
-N(R¹⁶)-SO₂-(C₁-C₆-Alkyl), -N(R¹⁶)-CO-(C₁-C₆-Alkyl), Chlorsulfonyl, Hydroxysulfonyl oder -SO₂-N(R¹⁸)R¹⁹;
- R⁶: Wasserstoff, C₁-C₆-Alkyl, C₁-C₆-Halogenalkyl, C₃-C₆-Alkenyl, C₃-C₆-Alkinyl, C₃-C₆-Cycloalkyl oder C₁-C₆-Alkoxy-C₁-C₆-alkyl;
- R⁷: Wasserstoff oder C₁-C₆-Alkyl;
- R⁸: Wasserstoff, Hydroxy, C₁-C₆-Alkyl, Hydroxycarbonyl-C₁-C₆-alkyl, (C₁-C₆-Alkoxy)carbonyl-C₁-C₆-alkyl, C₁-C₆-Alkoxy, C₁-C₆-Halogenalkoxy, Phenyl-C₁-C₆-alkoxy, C₃-C₆-Alkenyloxy oder C₃-C₆-Alkinyloxy;
- R⁹: Wasserstoff, C₁-C₆-Alkyl, C₁-C₆-Halogenalkyl, C₃-C₆-Alkenyl, C₃-C₆-Alkinyl, C₃-C₆-Cycloalkyl oder C₁-C₆-Alkoxy-C₁-C₆-alkyl;
- R¹⁰: Wasserstoff, Halogen oder C₁-C₆-Alkyl;
- R¹¹-R¹⁴: unabhängig voneinander Wasserstoff, C₁-C₆-Alkyl oder (C₁-C₆-Alkoxy)carbonyl;
- R¹⁵: Wasserstoff, C₁-C₆-Alkyl, Phenyl-C₁-C₆-alkyl, (C₁-C₆-Alkoxy)carbonyl-C₁-C₆-alkyl, C₃-C₆-Alkenyl oder C₃-C₆-Alkinyl;
- R¹⁶: Wasserstoff oder C₁-C₆-Alkyl;
- R¹⁷: Wasserstoff, C₁-C₆-Alkyl, Hydroxycarbonyl-C₁-C₆-alkyl, (C₁-C₆-Alkoxy)carbonyl-C₁-C₆-alkyl oder C₁-C₆-Alkoxy;
- R¹⁸: Wasserstoff oder C₁-C₆-Alkyl;
- R¹⁹: Wasserstoff, C₁-C₆-Alkyl, Hydroxycarbonyl-C₁-C₆-alkyl, (C₁-C₆-Alkoxy)carbonyl-C₁-C₆-alkyl oder C₁-C₆-Alkoxy;
- X¹-X³: unabhängig voneinander Sauerstoff oder Schwefel,
sowie die landwirtschaftlich brauchbaren Salze der Verbindungen I mit R⁶ = Wasserstoff.

Außerdem betrifft die Erfindung
- die Verwendung der Verbindungen I als Herbizide oder zur Desikkation/Defoliation von Pflanzen,
- herbizide Mittel und Mittel zur Desikkation und/oder Defoliation von Pflanzen, welche die Verbindungen I als wirksame Substanzen enthalten,
- Verfahren zur Bekämpfung von unerwünschtem Pflanzenwuchs und zur Desikkation und/oder Defoliation von Pflanzen mit den Verbindungen I,
- Verfahren zur Herstellung der Verbindungen I und von herbiziden Mitteln und Mitteln zur Desikkation und/oder Defoliation von Pflanzen unter Verwendung der Verbindungen I sowie
- Zwischenprodukte der Formel IIa.

In WO 96/21646 und WO 96/21647 werden bereits bestimmte substituierte 2-Phenylpyridine vom Typ der Verbindungen I mit u.a. C₁-C₄-Alkylsulfinyl oder C₁-C₄-Alkylsulfonyl in 5-Position des Pyridinringes als herbizide und desikkante/defoliante Wirkstoffe beschrieben.

Des weiteren sind 2-Phenylpyridine mit herbizider bzw. desikkant/defolianter Wirkstamkeit, die sich von den vorliegenden Verbindungen I dadurch unterscheiden, daß R¹ direkt an den Pyridinring gebunden ist, Gegenstand der WO 98/07700. US 5 529 976 offenbart ebenfalls substituierte Pyridine mit herbizider Wirkstamkeit.

Die herbizide Wirkung der bekannten Verbindungen bezüglich der Schadpflanzen ist jedoch nicht immer völlig befriedigend. Aufgabe der vorliegenden Erfindung war es demnach, neue herbizid wirksame Verbindungen bereitzustellen, mit denen sich unerwünschte Pflanzen besser als bisher gezielt bekämpfen lassen. Die Aufgabe erstreckt sich auch auf die Bereitstellung neuer desikkant/defoliant wirksamer Verbindungen.

Demgemäß wurden die eingangs definierten substituierten 2-Phenylpyridine der Formel I mit herbizider Wirkung sowie neue Zwischenprodukte IIa zu deren Herstellung gefunden.

Ferner wurden herbizide Mittel gefunden, die die Verbindungen I enthalten und eine sehr gute herbizide Wirkung besitzen. Außerdem wurden Verfahren zur Herstellung dieser Mittel und Verfahren zur Bekämpfung von unerwünschtem Pflanzenwuchs mit den Verbindungen I gefunden.

Des weiteren wurde gefunden, daß die Verbindungen I auch zur Defoliation/Desikkation von Pflanzenteilen geeignet sind, wofür Kulturpflanzen wie Baumwolle, Kartoffel, Raps, Sonnenblume, Sojabohne oder Ackerbohnen, insbesondere Baumwolle und Kartoffel, in Betracht kommen. Diesbezüglich wurden Mittel zur Desikkation und/oder Defoliation von Pflanzen, Verfahren zur Herstellung dieser Mittel und Verfahren zur Desikkation und/oder Defoliation von Pflanzen mit den Verbindungen I gefunden.

Die Verbindungen der Formel I können je nach Substitutionsmuster ein oder mehrere Chiralitätszentren enthalten und liegen dann als Enantiomeren- oder Diastereomerengemische vor. Gegenstand der Erfindung sind sowohl die reinen Enantiomere oder Diastereomere als auch deren Gemische.

Die substituierten 2-Phenylpyridine I mit R⁶ = Wasserstoff können in Form ihrer landwirtschaftlich brauchbaren Salze vorliegen, wobei es auf die Art des Salzes in der Regel nicht ankommt. Im allgemeinen kommen die Salze von solchen Basen in Betracht, bei denen die herbizide Wirkung im Vergleich zu der freien Verbindung I nicht negativ beeinträchtigt ist.

Als Salze eignen sich besonders diejenigen der Alkalimetalle, vorzugsweise Natrium- und Kaliumsalze, der Erdalkalimetalle, vorzugsweise Calcium- und Magnesiumsalze, die der Übergangsmetalle, vorzugsweise Zink- und Eisensalze, sowie Ammoniumsalze, bei denen das Ammoniumion gewünschtenfalls ein bis vier C₁-C₄-Alkyl-, Hydroxy-C₁-C₄-alkylsubstituenten und/oder einen Phenyl- oder Benzylsubstituenten tragen kann, vorzugsweise Diisopropylammonium-, Tetramethylammonium-, Tetrabutylammonium-, Trimethylbenzylammonium- und Trimethyl-(2-hydroxyethyl)-ammoniumsalze, des weiteren Phosphoniumsalze, Sulfoniumsalze wie vorzugsweise Tri-(C₁-C₄-alkyl)sulfonium-salze, und Sulfoxoniumsalze wie vorzugsweise Tri-(C₁-C₄-alkyl)sulfoxoniumsalze.

Die für die Substituenten R¹ und R⁴ bis R¹⁹ oder als Reste an einem Phenylring genannten organischen Molekülteile stellen Sammelbegriffe für individuelle Aufzählungen der einzelnen Gruppenmitglieder dar. Sämtliche Kohlenstoffketten, also alle Alkyl-, Halogenalkyl-, Phenylalkyl-, Alkylen-, Alkoxy-, Halogenalkoxy-, Phenylalkoxy-, Alkylsulfinyl-, Alkylsulfonyl-, Hydroxycarbonylalkyl-, Alkenyl-, Alkinyl-, Alkenyloxy- und Alkinyloxy-Teile können geradkettig oder verzweigt sein.
Halogenierte Substituenten tragen vorzugsweise ein bis fünf gleiche oder verschiedene Halogenatome.

Die Bedeutung Halogen steht jeweils für Fluor, Chlor, Brom oder Iod, insbesondere für Fluor oder Chlor.

Ferner stehen beispielsweise:
- C₁-C₆-Alkyl für: C₁-C₄-Alkyl wie CH₃, C₂H₅, CH₂-C₂H₅, CH(CH₃)₂, n-Butyl, CH(CH₃)-C₂H₅, CH₂-CH(CH₃)₂ und C(CH₃)₃, oder z.B. n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, insbesondere für CH₃, C₂H₅, CH₂-C₂H₅, CH(CH₃)₂, n-Butyl, C(CH₃)₃, n-Pentyl oder n-Hexyl;
- C₁-C₆-Halogenalkyl für: einen C₁-C₆-Alkylrest wie vorstehend genannt, der partiell oder vollständig durch Fluor, Chlor, Brom und/oder Iod substituiert ist, also z.B. CH₂F, CHF₂, CF_{3,} CH₂Cl, CH(Cl)₂, C(Cl)₃, CHFCl, CF(Cl)₂, CF₂Cl, CF₂Br, 1-Fluorethyl, 2-Fluorethyl, 2-Chlorethyl, 2-Bromethyl, 2-Iodethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 1,2-Dichlorethyl, 2,2,2-Trichlorethyl, C₂F₅, 2-Fluorpropyl, 3-Fluorpropyl, 2,2-Difluorpropyl, 2,3-Difluorpropyl, 2-Chlorpropyl, 3-Chlorpropyl, 2,3-Dichlorpropyl, 2-Brompropyl, 3-Brompropyl, 3,3,3-Trifluorpropyl, 3,3,3-Trichlorpropyl, CH₂-C₂F₅, CF₂-C₂F₅, 1-(Fluormethyl)-2-fluorethyl, 1-(Chlormethyl)-2-chlorethyl, 1-(Brommethyl)-2-bromethyl, 4-Fluorbutyl, 4-Chlorbutyl, 4-Brombutyl, Nonafluorbutyl, 5-Fluorpentyl, 5-Chlorpentyl, 5-Brompentyl, 5-Iodpentyl, 5,5,5-Trichlorpentyl, Undecafluorpentyl, 6-Fluorhexyl, 6-Chlorhexyl, 6-Bromhexyl, 6-Iodhexyl, 6,6,6-Trichlorhexyl oder Dodecafluorhexyl, insbesondere für CH₂F, CHF₂, CF₃, CH₂Cl, 2-Fluorethyl, 2-Chlorethyl, 1,2-Dichlorethyl, 2,2,2-Trifluorethyl oder C₂F₅;
- Phenyl-C₁-C₆-alkyl für: z.B. Benzyl, 1-Phenylethyl, 2-Phenylethyl, 1-Phenylprop-1-yl, 2-Phenylprop-1-yl, 3-Phenylprop-1-yl, 1-Phenylbut-1-yl, 2-Phenylbut-1-yl, 3-Phenylbut-1-yl, 4-Phenylbut-1-yl, 1-Phenylbut-2-yl, 2-Phenylbut-2-yl, 3-Phenylbut-2-yl, 4-Phenylbut-2-yl, 1-(Benzyl)-eth-1-yl, 1-(Benzyl)-1-(methyl)-eth-1-yl, 1-(Benzyl)-prop-1-yl oder 2-Phenyl-hex-6-yl, insbesondere für Benzyl oder 2-Phenylethyl;
- C₃-C₆-Cycloalkyl für: Cyclopropyl, Cyclobutyl, Cyclopentyl oder Cyclohexyl, insbesondere für Cyclopentyl oder Cyclohexyl;
- C₁-C₄-Alkylen für: -CH₂-, -CH(CH₃)-, 1,2-Ethylen, 1,1-Propylen, 1,2-Propylen, 1,3-Propylen, -C(CH₃)₂-, 1,1-Butylen, 1,2-Butylen, 1,3-Butylen, 1,4-Butylen, 2,2-Butylen, 2,3-Butylen, 2-Methyl-1,1-propylen, 2-Methyl-1,2-propylen oder 2-Methyl-1,3-propylen, vorzugsweise für Methylen, 1,1-Ethylen, 1,2-Ethylen, 1,1-Propylen oder 2,2-Propylen;
- C₁-C₆-Alkoxy für: z.B. OCH₃, OC₂H₅, n-Propoxy, OCH(CH₃)₂, n-Butoxy, OCH(CH₃)-C₂H₅, OCH₂-CH(CH₃)₂, OC(CH₃)₃, n-Pentoxy, 1-Methylbutoxy, 2-Methylbutoxy, 3-Methylbutoxy, 1,1-Dimethylpropoxy, 1,2-Dimethylpropoxy, 2,2-Dimethylpropoxy, 1-Ethylpropoxy, n-Hexoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy oder 1-Ethyl-2-methylpropoxy, insbesondere OCH₃, OC₂H₅, OCH(CH₃)₂ oder OC(CH₃)₃;
- C₁-C₆-Halogenalkoxy für: C₁-C₆-Alkoxy wie vorstehend genannt, das partiell oder vollständig durch Fluor, Chlor, Brom und/oder Iod substituiert ist, also z.B. OCH₂F, OCHF₂, OCF₃, OCH₂Cl, OCH(Cl)₂, OC(Cl)₃, OCHFCl, OCF(Cl)₂, OCF₂Cl, OCF₂Br, 1-Fluorethoxy, 2-Fluorethoxy, 2-Bromethoxy, 2-Iodethoxy, 2,2-Difluorethoxy, 2,2,2-Trifluorethoxy, 2-Chlor-2-fluorethoxy, 2-Chlor-2,2-difluorethoxy, 2,2-Dichlor-2-fluorethoxy, 2,2,2-Trichlorethoxy, OC₂F₅, 2-Fluorpropoxy, 3-Fluorpropoxy, 2-Chlorpropoxy, 3-Chlorpropoxy, 2-Brompropoxy, 3-Brompropoxy, 2,2-Difluorpropoxy, 2,3-Difluorpropoxy, 2,3-Dichlorpropoxy, 3,3,3-Trifluorpropoxy, 3,3,3-Trichlorpropoxy, 2,2,3,3,3-Pentafluorpropoxy, OCF₂-C₂F₅, 1-(CH₂F)-2-fluorethoxy, 1-(CH₂Cl)-2-chlorethoxy, 1-(CH₂Br)-2-bromethoxy, 4-Fluorbutoxy, 4-Chlorbutoxy, 4-Brombutoxy, Nonafluorbutoxy, 5-Fluorpentoxy, 5-Chlorpentoxy, 5-Brompentoxy, 5-Iodpentoxy, Undecafluorpentoxy, 6-Fluorhexoxy, 6-Chlorhexoxy, 6-Bromhexoxy oder Dodecafluorhexoxy;
- Phenyl-C₁-C₆-alkoxy für: z.B. Benzyloxy, 1-Phenylethoxy, 2-Phenylethoxy, 1-Phenylprop-1-yloxy, 2-Phenylprop-1-yloxy, 3-Phenylprop-1-yloxy, 1-Phenylbut-1-yloxy, 2-Phenylbut-1-yloxy, 3-Phenylbut-1-yloxy, 4-Phenylbut-1-yloxy, 1-Phenylbut-2-yloxy, 2-Phenylbut-2-yloxy, 3-Phenylbut-2-yloxy, 4-Phenylbut-2-yloxy, 1-(Benzyl)-eth-1-yloxy, 1-(Benzyl)-1-(methyl)-eth-1-yloxy, 1-(Benzyl)-prop-1-yloxy oder 2-Phenyl-hex-6-yloxy, insbesondere für Benzyloxy oder 2-Phenylethoxy;
- C₁-C₆-Alkoxy-C₁-C₆-alkyl für: durch C₁-C₆-Alkoxy wie vorstehend genannt substituiertes C₁-C₆-Alkyl, also z.B. für CH₂OCH₃, CH₂OC₂H₅, CH₂OCH₂-C₂H₅, CH₂OCH(CH₃)₂, CH₂OCH₂CH₂-C₂H₅, (1-Methylpropoxy)methyl, (2-Methylpropoxy)methyl, CH₂OC(CH₃)₃, CH₂O(CH₂)₃-C₂H₅, CH₂O(CH₂)₄-C₂H₅, CH(CH₃)OCH₃, CH(CH₃)OC₂H₅, CH₂CH₂OCH₃, CH₂CH₂OC₂H₅, CH₂CH₂OCH₂-C₂H₅, CH₂CH₂OCH(CH₃)₂, CH₂CH₂OCH₂CH₂-C₂H₅, 2-(1-Methylpropoxy)ethyl, 2-(2-Methylpropoxy)ethyl, CH₂CH₂OC(CH₃)₃, CH₂CH₂O(CH₂)₃-C₂H₅, CH₂CH₂O(CH₂)₄-C₂H₅, 2-(OCH₃)propyl, 2-(OC₂H₅)propyl, 2-(OCH₂-C₂H₅)propyl, 2-[OCH(CH₃)₂]propyl, 2-(OCH₂CH₂-C₂H₅)-propyl, 2-(1-Methylpropoxy)propyl, 2-(2-Methylpropoxy)propyl, 2-[OC(CH₃)₃]propyl, 3-(OCH₃)propyl, 3-(OC₂H₅)propyl, 3-(OCH₂-C₂H₅)propyl, 3-[OCH(CH₃)₂]propyl, 3-(OCH₂CH₂-C₂H₅)-propyl, 3-(1-Methylpropoxy)propyl, 3-(2-Methylpropoxy)-propyl, 3- [OC(CH₃)₃]propyl, 3-[O(CH₂)₃-C₂H₅]propyl, 3-[O(CH₂)₄-C₂H₅]propyl, 2-(OCH₃)butyl, 2-(OC₂H₅)butyl, 2-(OCH₂-C₂H₅)butyl, 2-[OCH(CH₃)₂]butyl, 2-(OCH₂CH₂-C₂H₅)-butyl, 2-(1-Methylpropoxy)butyl, 2-(2-Methylpropoxy)butyl, 2-[OC(CH₃)₃]butyl, 3-(OCH₃)butyl, 3-(OC₂H₅)butyl, 3-(OCH₂-C₂H₅)butyl, 3-[OCH(CH₃)₂]butyl, 3-(OCH₂CH₂-C₂H₅)-butyl, 3-(1-Methylpropoxy)butyl, 3-(2-Methylpropoxy)butyl, 3-[OC(CH₃)₃]butyl, 4-(OCH₃)butyl, 4-(OC₂H₅)butyl, 4-(OCH₂-C₂H₅)butyl, 4-[OCH(CH₃)₂]butyl, 4-(OCH₂CH₂-C₂H₅)-butyl, 4-(1-Methylpropoxy)butyl, 4-(2-Methylpropoxy)butyl, 4-[OC(CH₃)₃]butyl, 4-[O(CH₂)₃-C₂H₅]butyl, 4-[O(CH₂)₄-C₂H₅]-butyl, 5-(OCH₃)pentyl, 5-(OC₂H₅)pentyl, 5-(OCH₂-C₂H₅)pentyl, 5-[OCH(CH₃)₂]pentyl, 5-(OCH₂CH₂-C₂H₅)pentyl, 5-(1-Methylpropoxy)pentyl, 5-(2-Methylpropoxy)pentyl, 5-[OC(CH₃)₃]pentyl, 5-[O(CH₂)₃-C₂H₅]pentyl, 5-[O(CH₂)₄-C₂H₅]pentyl, 6-(OCH₃)hexyl, 6-(OC₂H₅)hexyl, 6-(OCH₂-C₂H₅)hexyl, 6-[OCH(CH₃)₂]hexyl, 6-(OCH₂CH₂-C₂H₅)hexyl, 6-(1-Methylpropoxy)hexyl, 6-(2-Methylpropoxy)hexyl, 6-[OC(CH₃)₃]hexyl, 6-[O(CH₂)₃-C₂H₅]hexyl oder 6- [O(CH₂)₄-C₂H₅] hexyl, insbesondere für CH₂OCH₃, CH(CH₃)OCH₃, CH₃CH₂OCH₃ oder CH(CH₃)CH₂OCH₃ ;
- Hydroxycarbonyl-C₁-C₆-alkyl für: z.B. CH₂COOH, CH(CH₃)COOH, CH₂CH₂COOH, 1-(COOH)prop-1-yl, 2-(COOH)prop-1-yl, 3-(COOH)prop-1-yl, 1-(COOH)but-1-yl, 2-(COOH)but-1-yl, 3-(COOH)but-1-yl, 4-(COOH)but-1-yl, 1-(COOH)but-2-yl, 2-(COOH)but-2-yl, 3-(COOH)but-2-yl, 4-(COOH)but-2-yl, 1-(CH₂COOH)eth-1-yl, 1-(CH₂COOH)-1-(CH₃)-eth-1-yl, 1-(CH₂COOH)prop-1-yl, 5-(COOH)pent-1-yl oder 6-(COOH)hex-1-yl;
- (C₁-C₆-Alkoxy)carbonyl für: COOCH₃, COOC₂H₅, n-Propoxycarbonyl, OCH(CH₃)₂, n-Butoxycarbonyl, 1-Methylpropoxycarbonyl, 2-Methylpropoxycarbonyl, OC(CH₃)₃, n-Pentoxycarbonyl, 1-Methylbutoxycarbonyl, 2-Methylbutoxycarbonyl, 3-Methylbutoxycarbonyl, 2,2-Dimethylpropoxycarbonyl, 1-Ethylpropoxycarbonyl, n-Hexoxycarbonyl, 1,1-Dimethylpropoxycarbonyl, 1,2-Dimethylpropoxycarbonyl, 1-Methylpentoxycarbonyl, 2-Methylpentoxycarbonyl, 3-Methylpentoxycarbonyl, 4-Methylpentoxycarbonyl, 1,1-Dimethylbutoxycarbonyl, 1,2-Dimethylbutoxycarbonyl, 1,3-Dimethylbutoxycarbonyl, 2,2-Dimethylbutoxycarbonyl, 2,3-Dimethylbutoxycarbonyl, 3,3-Dimethylbutoxycarbonyl, 1-Ethylbutoxycarbonyl, 2-Ethylbutoxycarbonyl, 1,1,2-Trimethylpropoxycarbonyl, 1,2,2-Trimethylpropoxycarbonyl, 1-C₂H₅-1-CH₃-propoxycarbonyl oder 1-C₂H₅-2-CH₃-propoxycarbonyl, insbesondere für COOCH₃, COOC₂H₅ oder COOC(CH₃)₃;
- (C₁-C₆-Alkoxy)carbonyl-C₁-C₆-alkyl für: durch (C₁-C₆-Alkoxy)-carbonyl wie vorstehend genannt substituiertes C₁-C₆-Alkyl, also z.B. für CH₂COOCH₃, CH₂COOC₂H₅, CH₂COOCH₂-C₂H₅, CH₂COOCH(CH₃)₂, CH₂COOCH₂CH₂-C₂H₅, (1-Methylpropoxycarbonyl)-methyl, (2-Methylpropoxycarbonyl)methyl, CH₂COOC(CH₃)₃, CH₂COO(CH₂)₃-C₂H₅, CH₂COO(CH₂)₄-C₂H₅, CH(CH₃)COOCH₃, CH(CH₃)COOC₂H₅, CH₂CH₂COOCH₃, CH₂CH₂COOC₂H₅, CH₂CH₂COOCH₂-C₂H₅, CH₂CH₂COOCH(CH₃)₂, CH₂CH₂COOCH₂CH₂-C₂H₅, 2-(1-Methylpropoxycarbonyl)ethyl, 2-(2-Methylpropoxycarbonyl)ethyl, CH₂CH₂COOC(CH₃)₃, CH₂CH₂COO(CH₂)₃-C₂H₅, CH₂CH₂COO(CH₂)₄-C₂H₅, 2-(COOCH₃)propyl, 2-(COOC₂H₅)propyl, 2-(COOCH₂-C₂H₅)propyl, 2-[COOCH(CH₃)₂]propyl, 2-(COOCH₂CH₂-C₂H₅)propyl, 2-(1-Methylpropoxycarbonyl)propyl, 2-(2-Methylpropoxycarbonyl)propyl, 2-[COOC(CH₃)₃]propyl, 3-(COOCH₃)propyl, 3-(COOC₂H₅)propyl, 3-(COOCH₂-C₂H₅)propyl, 3-[COOCH(CH₃)₂]propyl, 3-(COOCH₂CH₂-C₂H₅)propyl, 3-(1-Methylpropoxycarbonyl)propyl, 3-(2-Methylpropoxycarbonyl)propyl, 3-[COOC(CH₃)₃]propyl, 3-[COO(CH₂)₃-C₂H₅]propyl, 3-[COO(CH₂)₄-C₂H₅]propyl, 2-(COOCH₃)butyl, 2-(COOC₂H₅)butyl, 2-(COOCH₂-C₂H₅)butyl, 2-[COOCH(CH₃)₂]butyl, 2-(COOCH₂CH₂-C₂H₅)butyl, 2-(1-Methylpropoxycarbonyl)butyl, 2-(2-Methylpropoxycarbonyl)butyl, 2-[COOC(CH₃)₃]butyl, 3-(COOCH₃)butyl, 3-(COOC₂H₅)butyl, 3-(COOCH₂-C₂H₅)butyl, 3-[COOCH(CH₃)₂]butyl, 3-(COOCH₂CH₂-C₂H₅)butyl, 3-(1-Methylpropoxycarbonyl)butyl, 3-(2-Methylpropoxycarbonyl)butyl, 3-[COOC(CH₃)₃]butyl, 4-(COOCH₃)butyl, 4-(COOC₂H₅)butyl, 4-(COOCH₂-C₂H₅)butyl, 4-[COOCH(CH₃)₂]butyl, 4-(COOCH₂CH₂-C₂H₅)butyl, 4-(1-Methylpropoxycarbonyl)butyl, 4-(2-Methylpropoxycarbonyl)butyl, 4-[COOC(CH₃)₃]butyl, 4-[COO(CH₂)₃-C₂H₅]butyl, 4-[COO(CH₂)₄-C₂H₅]butyl, 5-(COOCH₃)pentyl, 5-(COOC₂H₅)pentyl, 5-(COOCH₂-C₂H₅)pentyl, 5-[COOCH(CH₃)₂]pentyl, 5-(COOCH₂CH₂-C₂H₅)pentyl, 5-(1-Methylpropoxycarbonyl)pentyl, 5-(2-Methylpropoxycarbonyl)pentyl, 5-[COOC(CH₃)₃]pentyl, 5- [COO(CH₂)₃-C₂H₅]pentyl, 5-[COO(CH₂)₄-C₂H₅]pentyl, 6-(COOCH₃)hexyl, 6-(COOC₂H₅)hexyl, 6-(COOCH₂-C₂H₅)hexyl, 6-[COOCH(CH₃)₂]hexyl, 6-(COOCH₂CH₂-C₂H₅)hexyl, 6-(1-Methylpropoxycarbonyl)hexyl, 6-(2-Methylpropoxycarbonyl)hexyl, 6-[COOC(CH₃)₃]hexyl, 6- [COO(CH₂)₃-C₂H₅] hexyl oder 6-[COO(CH₂)₄-C₂H₅]hexyl, insbesondere für CH₂COOCH₃, CH₂COOCH(CH₃)₂ oder CH(CH₃)COOCH₃;
- (C₁-C₆-Alkoxy)carbonyl-C₁-C₆-alkoxy für: durch (C₁-C₆-Alkoxy)-carbonyl wie vorstehend genannt substituiertes C₁-C₆-Alkoxy, also z.B. für OCH₂COOCH₃, OCH₂COOC₂H₅, OCH₂COOCH₂-C₂H₅, OCH₂COOCH(CH₃)₂, OCH₂COOCH₂CH₂-C₂H₅, (1-Methylpropoxycarbonyl)-methoxy, (2-Methylpropoxycarbonyl)methoxy, OCH₂COOC(CH₃)₃, OCH₂COO(CH₂)₃-C₂H₅, OCH₂COO(CH₂)₄-C₂H₅, OCH(CH₃)COOCH₃, OCH(CH₃)COOC₂H₅, OCH₂CH₂COOCH₃, OCH₂CH₂COOC₂H₅, OCH₂CH₂COOCH₂-C₂H₅, OCH₂CH₂COOCH(CH₃)₂, OCH₂CH₂COOCH₂CH₂-C₂H₅, 2-(1-Methylpropoxycarbonyl)ethoxy, 2-(2-Methylpropoxycarbonyl)ethoxy, OCH₂CH₂COOC(CH₃)₃, OCH₂CH₂COO(CH₂)₃-C₂H₅, OCH₂CH₂COO(CH₂)₄-C₂H₅, 2-(COOCH₃)propoxy, 2-(COOC₂H₅)propoxy, 2- (COOCH₂-C₂H₅)propoxy, 2-[COOCH(CH₃)₂]propoxy, 2-(COOCH₂CH₂-C₂H₅)propoxy, 2-(1-Methylpropoxycarbonyl)propoxy, 2-(2-Methylpropoxycarbonyl)propoxy, 2-[COOC(CH₃)₃]propoxy, 3-(COOCH₃)propoxy, 3-(COOC₂H₅)propoxy, 3-(COOCH₂-C₂H₅)propoxy, 3-[COOCH(CH₃)₂] propoxy, 3-(COOCH₂CH₂-C₂H₅)propoxy, 3-(1-Methylpropoxycarbonyl)propoxy, 3-(2-Methylpropoxycarbonyl)propoxy, 3-[COOC(CH₃)₃]propoxy, 3- [COO(CH₂)₃-C₂H₅]propoxy, 3- [COO(CH₂)₄-C₂H₅]propoxy, 2-(COOCH₃)butoxy, 2-(COOC₂H₅)butoxy, 2-(COOCH₂-C₂H₅)butoxy, 2-[COOCH(CH₃)₂]butoxy, 2-(COOCH₂CH₂-C₂H₅)butoxy, 2-(1-Methylpropoxycarbonyl)butoxy, 2- (2-Methylpropoxycarbonyl)butoxy, 2-[COOC(CH₃)₃]butoxy, 3-(COOCH₃)butoxy, 3-(COOC₂H₅)butoxy, 3-(COOCH₂-C₂H₅)butoxy, 3-[COOCH(CH₃)₂]butoxy, 3-(COOCH₂CH₂-C₂H₅)butoxy, 3-(1-Methylpropoxycarbonyl)butoxy, 3-(2-Methylpropoxycarbonyl)butoxy, 3-[COOC(CH₃)₃]butoxy, 4-(COOCH₃)butoxy, 4-(COOC₂H₅)butoxy, 4-(COOCH₂-C₂H₅)butoxy, 4-[COOCH(CH₃)₂]butoxy, 4-(COOCH₂CH₂-C₂H₅)butoxy, 4-(1-Methylpropoxycarbonyl) butoxy, 4-(2-Methylpropoxycarbonyl)butoxy, 4-[COOC(CH₃)₃]butoxy, 4-[COO(CH₂)₃-C₂H₅]butoxy, 4-[COO(CH₂)₄-C₂H₅]butoxy, 5-(COOCH₃)pentoxy, 5-(COOC₂H₅)-pentoxy, 5-(COOCH₂-C₂H₅)pentoxy, 5-[COOCH(CH₃)₂]pentoxy, 5-(COOCH₂CH₂-C₂H₅)pentoxy, 5-(1-Methylpropoxycarbonyl)pentoxy, 5-(2-Methylpropoxycarbonyl)pentoxy, 5-[COOC(CH₃)₃]pentoxy, 5-[COO(CH₂)₃-C₂H₅]pentoxy, 5-[COO(CH₂)₄-C₂H₅]pentoxy, 6-(COOCH₃)hexoxy, 6-(COOC₂H₅)hexoxy, 6-(COOCH₂-C₂H₅)hexoxy, 6-[COOCH(CH₃)₂]hexoxy, 6-(COOCH₂CH₂-C₂H₅)hexoxy, 6-(1-Methylpropoxycarbonyl)hexoxy, 6-(2-Methylpropoxycarbonyl)hexoxy, 6-[COOC(CH₃)₃]hexoxy, 6- [COO(CH₂)₃-C₂H₅]hexoxy oder 6-[COO(CH₂)₄-C₂H₅]hexoxy, insbesondere für OCH₂COOCH₃, OCH₂COOCH(CH₃)₂, OCH(CH₃)COOCH₃ oder OCH₂CH₂COOCH₃;
- C₁-C₆-Alkylsulfinyl für: z.B. SOCH₃, SOC₂H₅, SOCH₂-C₂H₅, SOCH(CH₃)₂, n-Butylsulfinyl, SOCH(CH₃)-C₂H₅, SOCH₂-CH(CH₃)₂, SOC(CH₃)₃, n-Pentylsulfinyl, 1-Methylbutylsulfinyl, 2-Methylbutylsulfinyl, 3-Methylbutylsulfinyl, 2,2-Dimethylpropylsulfinyl, 1-Ethylpropylsulfinyl, n-Hexylsulfinyl, 1,1-Dimethylpropylsulfinyl, 1,2-Dimethylpropylsulfinyl, 1-Methylpentylsulfinyl, 2-Methylpentylsulfinyl, 3-Methylpentylsulfinyl, 4-Methylpentylsulfinyl, 1,1-Dimethylbutylsulfinyl, 1,2-Dimethylbutylsulfinyl, 1,3-Dimethylbutylsulfinyl, 2,2-Dimethylbutylsulfinyl, 2,3-Dimethylbutylsulfinyl, 3,3-Dimethylbutylsulfinyl, 1-Ethylbutylsulfinyl, 2-Ethylbutylsulfinyl, 1,1,2-Trimethylpropylsulfinyl, 1,2,2-Trimethylpropylsulfinyl, 1-Ethyl-1-methylpropylsulfinyl oder 1-Ethyl-2-methylpropylsulfinyl, insbesondere für SOCH₃ oder SOC₂H₅;
- C₁-C₆-Alkylsulfonyl für: z.B. SO₂CH₃, SO₂C₂H₅, SO₂CH₂-C₂H₅, SO₂CH(CH₃)₂, n-Butylsulfonyl, SO₂CH(CH₃)-C₂H₅, SO₂CH₂-CH(CH₃)₂, SO₂C(CH₃)₃, n-Pentylsulfonyl, 1-Methylbutylsulfonyl, 2-Methylbutylsulfonyl, 3-Methylbutylsulfonyl, 2,2-Dimethylpropylsulfonyl, 1-Ethylpropylsulfonyl, n-Hexylsulfonyl, 1,1-Dimethylpropylsulfonyl, 1,2-Dimethylpropylsulfonyl, 1-Methylpentylsulfonyl, 2-Methylpentylsulfonyl, 3-Methylpentylsulfonyl, 4-Methylpentylsulfonyl, 1,1-Dimethylbutylsulfonyl, 1,2-Dimethylbutylsulfonyl, 1,3-Dimethylbutylsulfonyl, 2,2-Dimethylbutylsulfonyl, 2,3-Dimethylbutylsulfonyl, 3,3-Dimethylbutylsulfonyl, 1-Ethylbutylsulfonyl, 2-Ethylbutylsulfonyl. 1,1,2-Trimethylpropylsulfonyl, 1,2,2-Trimethylpropylsulfonyl, 1-Ethyl-1-methylpropylsulfonyl oder 1-Ethyl-2-methylpropylsulfonyl, insbesondere für SO₂CH₃ oder SO₂C₂H₅;
- C₁-C₆-Halogenalkylsulfonyl für: C₁-C₆-Alkylsulfonyl wie vorstehend genannt, das partiell oder vollständig durch Fluor, Chlor, Brom und/oder Iod substituiert ist, also z.B. ClCH₂-SO₂-, CH(Cl)₂-SO₂-, C(Cl)₃-SO₂-, FCH₂-SO₂-, CHF₂-SO₂-, CF₃-SO₂-, Chlorfluormethyl-SO₂-, Dichlorfluormethyl-SO₂-, Chlordifluormethyl-SO₂-, 1-Fluorethyl-SO₂-, 2-Fluorethyl-SO₂-, 2-Chlorethyl-SO₂-, 2-Bromethyl-SO₂-, 2-Iodethyl-SO₂-, 2,2-Difluorethyl-SO₂-, 2,2,2-Trifluorethyl-SO₂-, 2-Chlor-2-fluorethyl-SO₂-, 2-Chlor-2,2-difluorethyl-SO₂-, 2,2-Dichlor-2-fluorethyl-SO₂-, 2,2,2-Trichlorethyl-SO₂-, C₂F₅-SO₂-, 2-Fluorpropyl-SO₂-, 3-Fluorpropyl-SO₂-, 2,2-Difluorpropyl-SO₂-, 2,3-Difluorpropyl-SO₂-, 2-Chlorpropyl-SO₂-, 3-Chlorpropyl-SO₂-, 2,3-Dichlorpropyl-SO₂-, 2-Brompropyl-SO₂-, 3-Brompropyl-SO₂-, 3,3,3-Trifluorpropyl-SO₂-, 3,3,3-Trichlorpropyl-SO₂-, 2,2,3,3,3-Pentafluorpropyl-SO₂-, C₂F₅-CF₂-SO₂-, 1-(Fluormethyl)-2-fluorethyl,-SO₂-, 1-(Chlormethyl)-2-chlorethyl-SO₂-, 1-(Brommethyl)-2-bromethyl-SO₂-, 4-Fluorbutyl-SO₂-, 4-Chlorbutyl-SO₂-, 4-Brombutyl-SO₂-, C₂F₅-CF₂-CF₂-SO₂-, 5-Fluorpentyl-SO₂-, 5-Chlorpentyl-SO₂-, 5-Brompentyl-SO₂-, 5-Iodpentyl-SO₂-, 5,5,5-Trichlorpentyl-SO₂-, C₂F₅-CF₂-CF₂-CF₂-SO₂-, 6-Fluorhexyl-SO₂-, 6-Chlorhexyl-SO₂-, 6-Bromhexyl-SO₂-, 6-Iodhexyl-SO₂-, 6,6,6-Trichlorhexyl-SO₂- oder Dodecafluorhexyl-SO₂-, insbesondere für CF₃-SO₂-;
- C₃-C₆-Alkenyl für: z.B. Prop-1-en-1-yl, Allyl, 1-Methylethenyl, n-Buten-1-yl, n-Buten-2-yl, n-Buten-3-yl, 1-Methylprop-1-en-l-yl, 2-Methylprop-1-en-1-yl, 1-Methylprop-2-en-1-yl, 2-Methylprop-2-en-1-yl, n-Penten-1-yl, n-Penten-2-yl, n-Penten-3-yl, n-Penten-4-yl, 1-Methylbut-1-en-1-yl, 2-Methylbut-1-en-1-yl, 3-Methylbut-1-en-1-yl, 1-Methylbut-2-en-1-yl, 2-Methylbut-2-en-1-yl, 3-Methylbut-2-en-1-yl, 1-Methylbut-3-en-1-yl, 2-Methylbut-3-en-1-yl, 3-Methylbut-3-en-1-yl, 1,1-Dimethyl-prop-2-en-1-yl, 1,2-Dimethylprop-1-en-1-yl, 1,2-Dimethyl-prop-2-en-1-yl, 1-Ethylprop-1-en-2-yl, 1-Ethylprop-2-en-1-yl, n-Hex-1-en-1-yl, n-Hex-2-en-1-yl, n-Hex-3-en-1-yl, n-Hex-4-en-1-yl, n-Hex-5-en-1-yl, 1-Methyl-pent-1-en-l-yl, 2-Methylpent-1-en-1-yl, 3-Methylpent-l-en-l-yl, 4-Methylpent-1-en-1-yl, 1-Methylpent-2-en-1-yl, 2-Methylpent-2-en-1-yl, 3-Methylpent-2-en-1-yl, 4-Methylpent-2-en-1-yl, 1-Methylpent-3-en-1-yl, 2-Methylpent-3-en-1-yl, 3-Methylpent-3-en-1-yl, 4-Methylpent-3-en-1-yl, 1-Methylpent-4-en-1-yl, 2-Methylpent-4-en-1-yl, 3-Methylpent-4-en-1-yl, 4-Methylpent-4-en-1-yl, 1,1-Dimethyl-but-2-en-1-yl, 1,1-Dimethyl-but-3-en-1-yl, 1,2-Dimethyl-but-1-en-1-yl, 1,2-Dimethyl-but-2-en-1-yl, 1,2-Dimethyl-but-3-en-1-yl, 1,3-Dimethyl-but-1-en-1-yl, 1,3-Dimethyl-but-2-en-1-yl, 1,3-Dimethyl-but-3-en-1-yl, 2,2-Dimethyl-but-3-en-1-yl, 2,3-Dimethyl-but-l-en-1-yl, 2,3-Dimethyl-but-2-en-1-yl, 2,3-Dimethyl-but-3-en-1-yl, 3,3-Dimethyl-but-1-en-1-yl, 3,3-Dimethyl-but-2-en-1-yl, 1-Ethylbut-1-en-1-yl, 1-Ethylbut-2-en-1-yl, 1-Ethylbut-3-en-1-yl, 2-Ethylbut-1-en-1-yl, 2-Ethylbut-2-en-1-yl, 2-Ethylbut-3-en-1-yl, 1,1,2-Trimethyl-prop-2-en-1-yl, 1-Ethyl-1-methylprop-2-en-1-yl, 1-Ethyl-2-methyl-prop-1-en-1-yl oder 1-Ethyl-2-methyl-prop-2-en-1-yl, insbesondere für Allyl;
- C₃-C₆-Alkinyl für: z.B. Prop-1-in-1-yl, Propargyl, n-But-1-in-1-yl, n-But-1-in-3-yl, n-But-1-in-4-yl, n-But-2-in-1-yl, n-Pent-1-in-1-yl, n-Pent-1-in-3-yl, n-Pent-1-in-4-yl, n-Pent-1-in-5-yl, n-Pent-2-in-1-yl, n-Pent-2-in-4-yl, n-Pent-2-in-5-yl, 3-Methyl-but-1-in-3-yl, 3-Methyl-but-1-in-4-yl, n-Hex-1-in-1-yl, n-Hex-1-in-3-yl, n-Hex-1-in-4-yl, n-Hex-1-in-5-yl, n-Hex-1-in-6-yl, n-Hex-2-in-1-yl, n-Hex-2-in-4-yl, n-Hex-2-in-5-yl, n-Hex-2-in-6-yl, n-Hex-3-in-1-yl, n-Hex-3-in-2-yl, 3-Methyl-pent-1-in-1-yl, 3-Methyl-pent-1-in-3-yl, 3-Methyl-pent-1-in-4-yl, 3-Methyl-pent-1-in-5-yl, 4-Methyl-pent-1-in-1-yl, 4-Methyl-pent-2-in-4-yl oder 4-Methyl-pent-2-in-5-yl, insbesondere für Propargyl;
- C₃-C₆-Alkenyloxy für: z.B. Prop-1-en-1-yloxy, Allyloxy, 1-Methylethenyloxy, n-Buten-1-yloxy, n-Buten-2-yloxy, n-Buten-3-yloxy, 1-Methylprop-1-en-1-yloxy, 2-Methylprop-1-en-1-yloxy, 1-Methylprop-2-en-1-yloxy, 2-Methylprop-2-en-1-yloxy, n-Penten-1-yloxy, n-Penten-2-yloxy, n-Penten-3-yloxy, n-Penten-4-yloxy, 1-Methylbut-1-en-1-yloxy, 2-Methylbut-1-en-1-yloxy, 3-Methylbut-1-en-1-yloxy, 1-Methylbut-2-en-1-yloxy, 2-Methylbut-2-en-1-yloxy, 3-Methylbut-2-en-1-yloxy, 1-Methylbut-3-en-1-yloxy, 2-Methylbut-3-en-1-yloxy, 3-Methylbut-3-en-1-yloxy, 1,1-Dimethyl-prop-2-en-1-yloxy, 1,2-Dimethyl-prop-1-en-1-yloxy, 1,2-Dimethyl-prop-2-en-1-yloxy, 1-Ethylprop-1-en-2-yloxy, 1-Ethylprop-2-en-1-yloxy, n-Hex-1-en-1-yloxy, n-Hex-2-en-1-yloxy, n-Hex-3-en-1-yloxy, n-Hex-4-en-1-yloxy, n-Hex-5-en-1-yloxy, 1-Methyl-pent-1-en-1-yloxy, 2-Methylpent-1-en-1-yloxy, 3-Methylpent-1-en-1-yloxy, 4-Methylpent-1-en-1-yloxy, l-Methylpent-2-en-1-yloxy, 2-Methylpent-2-en-1-yloxy, 3-Methylpent-2-en-1-yloxy, 4-Methylpent-2-en-1-yloxy, 1-Methylpent-3-en-1-yloxy, 2-Methylpent-3-en-1-yloxy, 3-Methylpent-3-en-1-yloxy, 4-Methylpent-3-en-1-yloxy, 1-Methylpent-4-en-1-yloxy, 2-Methylpent-4-en-1-yloxy, 3-Methylpent-4-en-1-yloxy, 4-Methylpent-4-en-1-yloxy, 1,1-Dimethyl-but-2-en-1-yloxy, 1,1-Dimethyl-but-3-en-1-yloxy, 1,2-Dimethyl-but-1-en-1-yloxy, 1,2-Dimethyl-but-2-en-1-yloxy, 1,2-Dimethyl-but-3-en-1-yloxy, 1,3-Dimethyl-but-1-en-1-yloxy, 1,3-Dimethyl-but-2-en-1-yloxy, 1,3-Dimethyl-but-3-en-1-yloxy, 2,2-Dimethyl-but-3-en-1-yloxy, 2, 3-Dimethyl-but-1-en-1-yloxy, 2,3-Dimethyl-but-2-en-1-yloxy, 2,3-Dimethyl-but-3-en-1-yloxy, 3,3-Dimethyl-but-1-en-1-yloxy, 3,3-Dimethyl-but-2-en-1-yloxy, 1-Ethylbut-1-en-1-yloxy, 1-Ethylbut-2-en-1-yloxy, 1-Ethylbut-3-en-1-yloxy, 2-Ethylbut-1-en-1-yloxy, 2-Ethylbut-2-en-1-yloxy, 2-Ethylbut-3-en-1-yloxy, 1,1,2-Trimethyl-prop-2-en-1-yloxy, 1-Ethyl-1-methyl-prop-2-en-1-yloxy, 1-Ethyl-2-methyl-prop-1-en-1-yloxy oder 1-Ethyl-2-methyl-prop-2-en-1-yloxy, insbesondere für Allyloxy;
- C₃-C₆-Alkinyloxy für: z.B. Prop-1-in-1-yloxy, Propargyloxy, n-But-1-in-1-yloxy, n-But-1-in-3-yloxy, n-But-1-in-4-yloxy, n-But-2-in-1-yloxy, n-Pent-1-in-1-yloxy, n-Pent-1-in-3-yloxy, n-Pent-1-in-4-yloxy, n-Pent-1-in-5-yloxy, n-Pent-2-in-1-yloxy, n-Pent-2-in-4-yloxy, n-Pent-2-in-5-yloxy, 3-Methyl-but-1-in-3-yloxy, 3-Methyl-but-1-in-4-yloxy, n-Hex-1-in-1-yloxy, n-Hex-1-in-3-yloxy, n-Hex-1-in-4-yloxy, n-Hex-1-in-5-yloxy, n-Hex-1-in-6-yloxy, n-Hex-2-in-1-yloxy, n-Hex-2-in-4-yloxy, n-Hex-2-in-5-yloxy, n-Hex-2-in-6-yloxy, n-Hex-3-in-1-yloxy, n-Hex-3-in-2-yloxy, 3-Methyl-pent-1-in-1-yloxy, 3-Methyl-pent-1-in-3-yloxy, 3-Methyl-pent-1-in-4-yloxy, 3-Methyl-pent-1-in-5-yloxy, 4-Methyl-pent-1-in-1-yloxy, 4-Methylpent-2-in-4-yloxy oder 4-Methyl-pent-2-in-5-yloxy, ins-besondere für Propargyloxy.

Im Hinblick auf die Verwendung der substituierten 2-Phenylpyridine I als Herbizide und/oder als desikkant/defoliant wirksame Verbindungen haben die Variablen vorzugsweise folgende Bedeutungen, und zwar jeweils für sich allein oder in Kombination:
- n: Null;
- R¹: C₁-C₆-Alkylsulfonyl, insbesondere SO₂CH₃;
- R²: Halogen, insbesondere Chlor;
- R³: Wasserstoff, Fluor oder Chlor, besonders bevorzugt Fluor oder Chlor, insbesondere Fluor;
- R⁴: Cyano oder Halogen, besonders bevorzugt Cyano oder Chlor, insbesondere Chlor;
- R⁵: Wasserstoff, Nitro, Cyano, Hydroxylamino, C₁-C₆-Alkyl (insbesondere CH₃), C₁-C₆-Halogenalkyl (insbesondere Halogenmethyl), -COCl, -CO-OR⁶, -CO-O-(C₁-C₄-Alkylen)-CO-OR⁶, -O-(C₁-C₄-Alkylen)-CO-OR⁶, -O-(C₁-C₄-Alkylen)-CO-O-(C₁-C₄-Alkylen)-CO-OR⁶, -OR⁹, Formyl, -CH=N-OR¹⁵ oder -NH₂, besonders bevorzugt -CO-OR⁶, -CO-O-(C₁-C₄-Alkylen)-CO-OR⁶, -O-(C₁-C₄-Alkylen)-CO-OR⁶ oder -OR⁹;
- R⁶: Wasserstoff, C₁-C₆-Alkyl, C₃-C₆-Alkenyl, C₃-C₆-Alkinyl oder C₁-C₆-Alkoxy-C₁-C₆-alkyl;
- R⁹: Wasserstoff, C₁-C₆-Alkyl, C₃-C₆-Alkenyl oder C₃-C₆-Alkinyl;
- R¹⁵: C₁-C₆-Alkyl.

Ganz besonders bevorzugt sind die Verbindungen der Formel Ia (≙ I mit n = Null; R¹ = Methylsulfonyl; R² und R⁴ = Chlor; R³ = Fluor), insbesondere die Verbindungen der Tabelle 1:

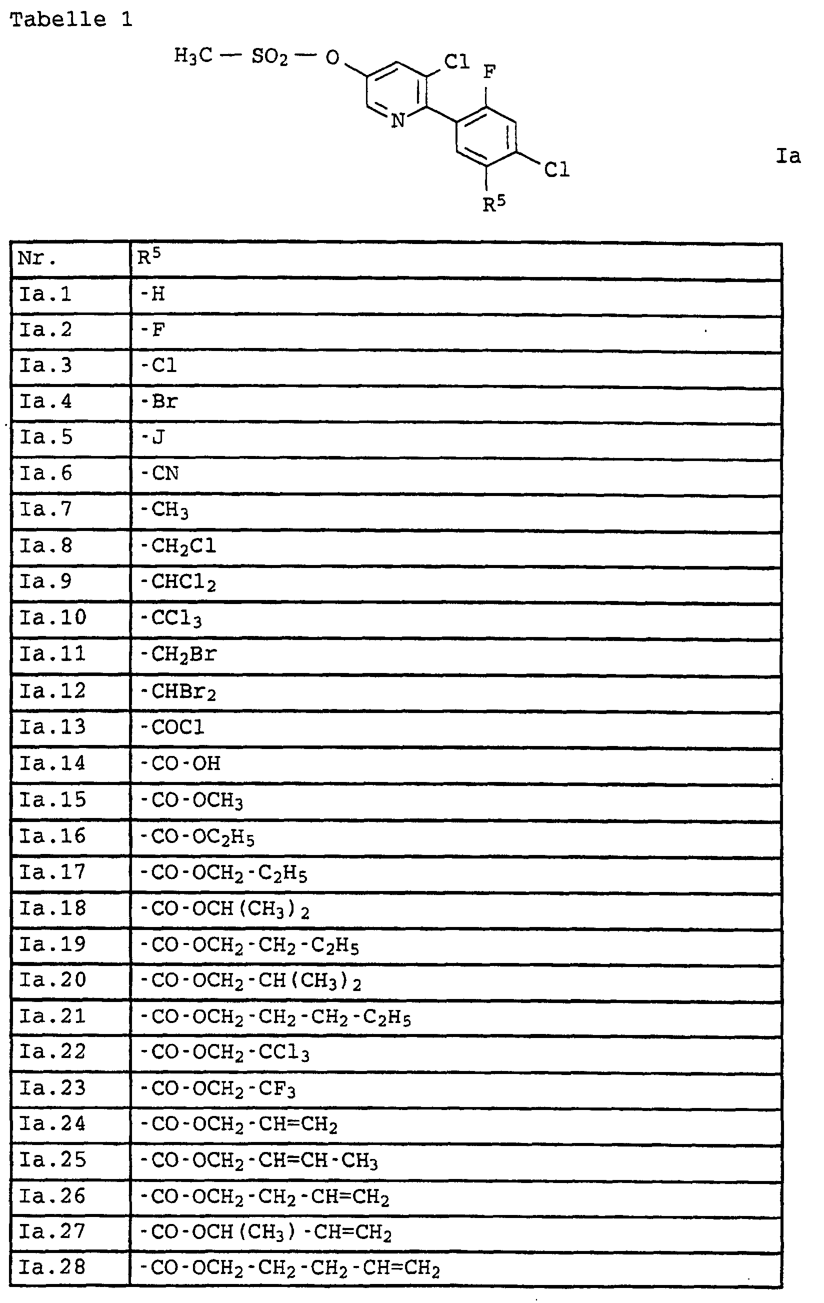

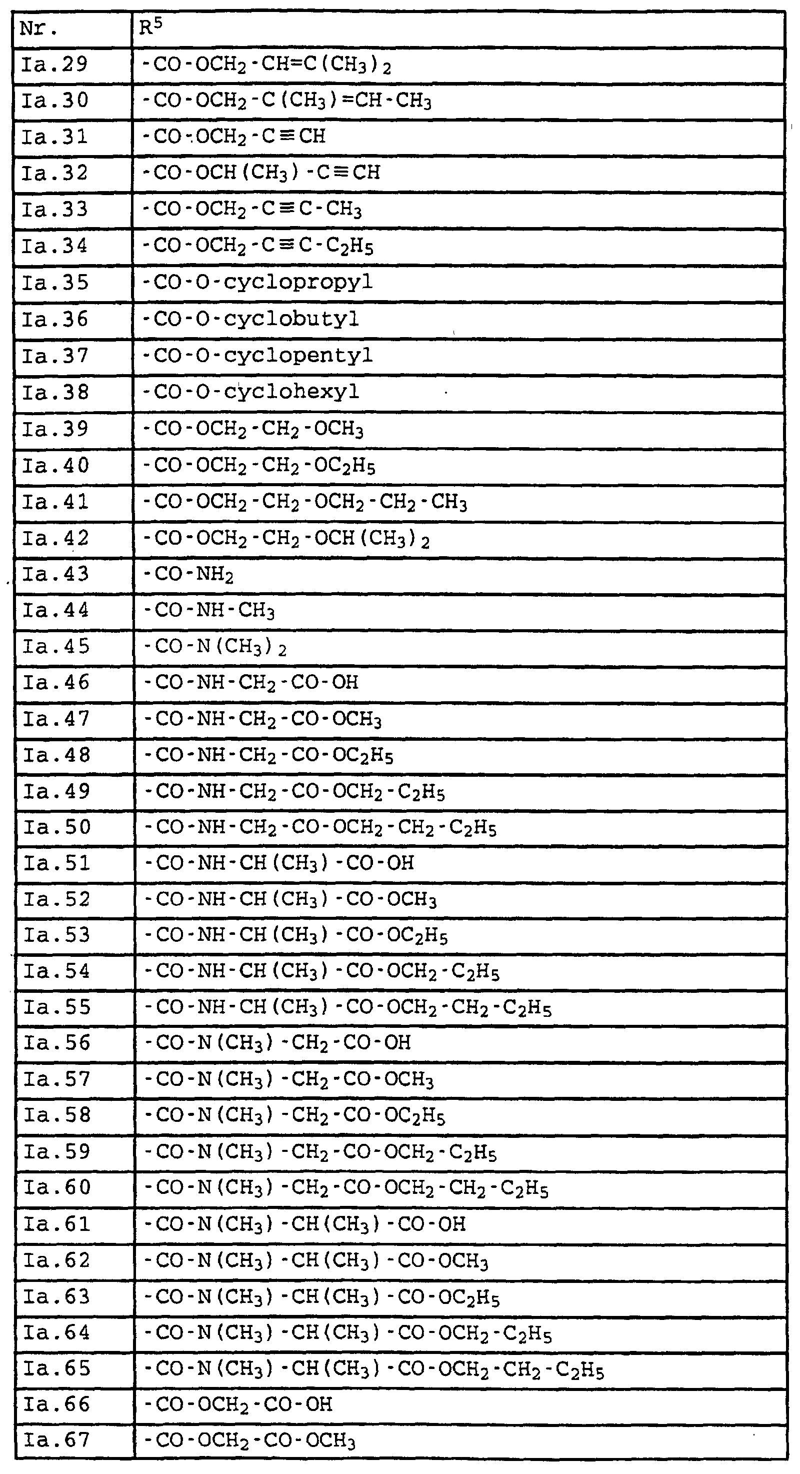

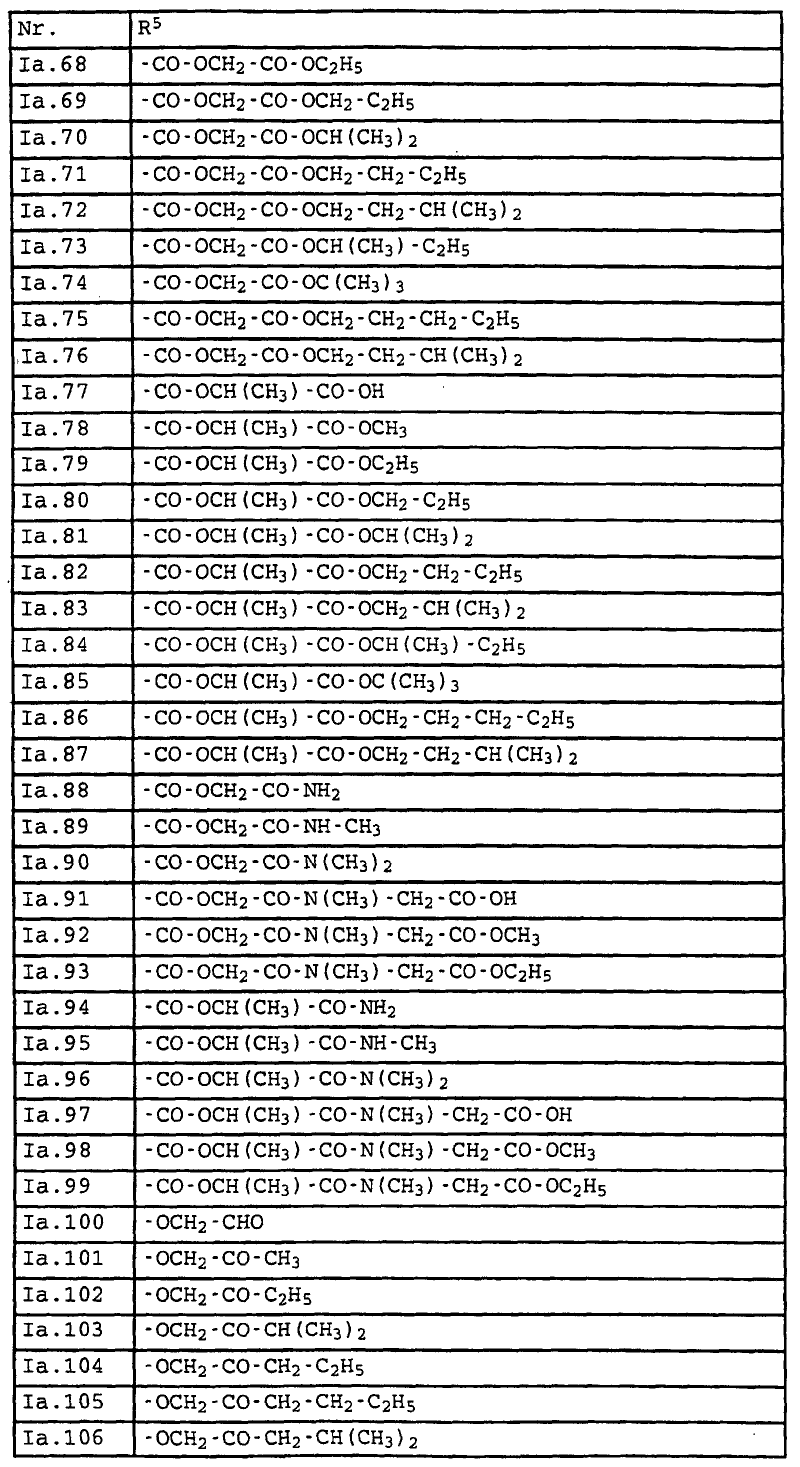

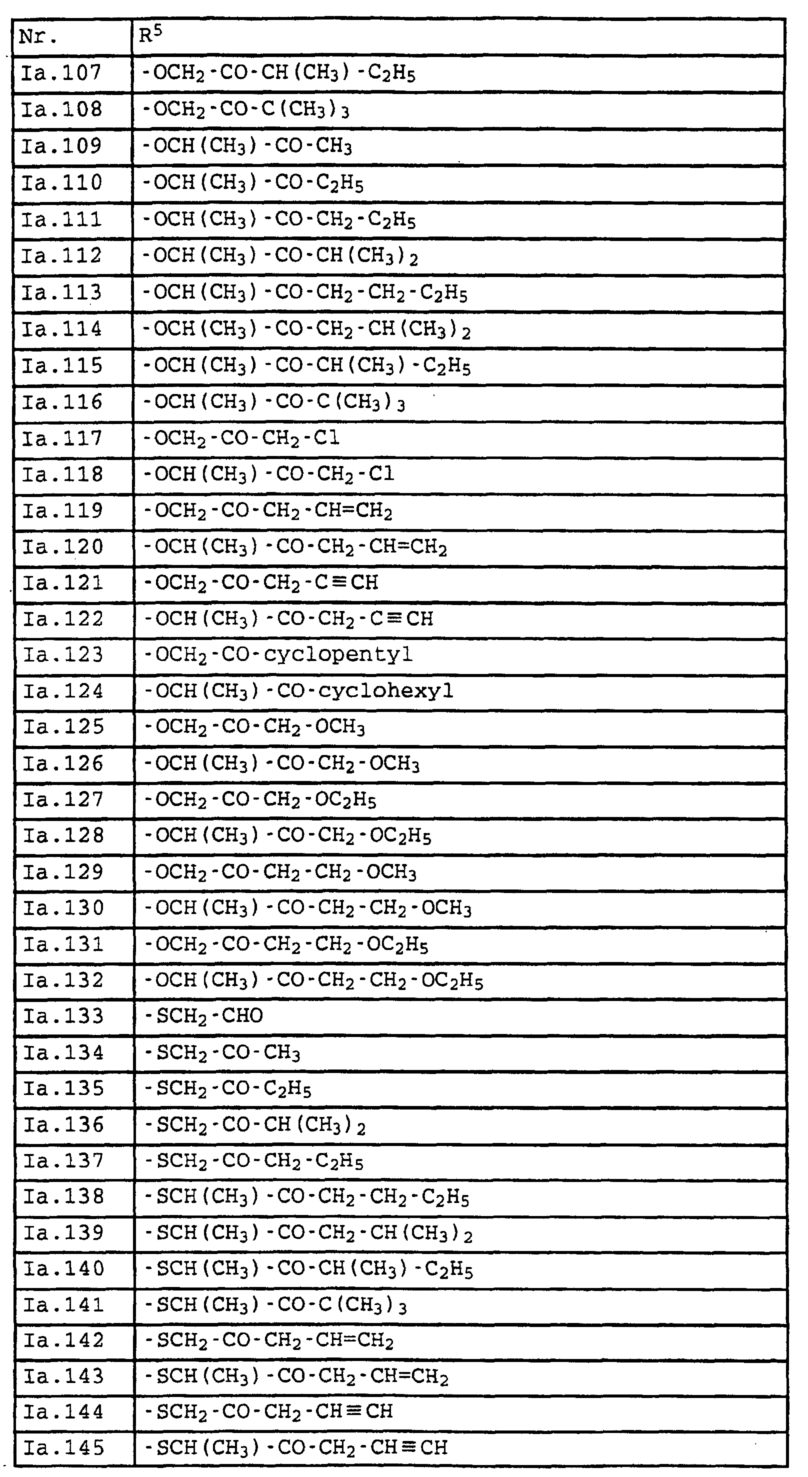

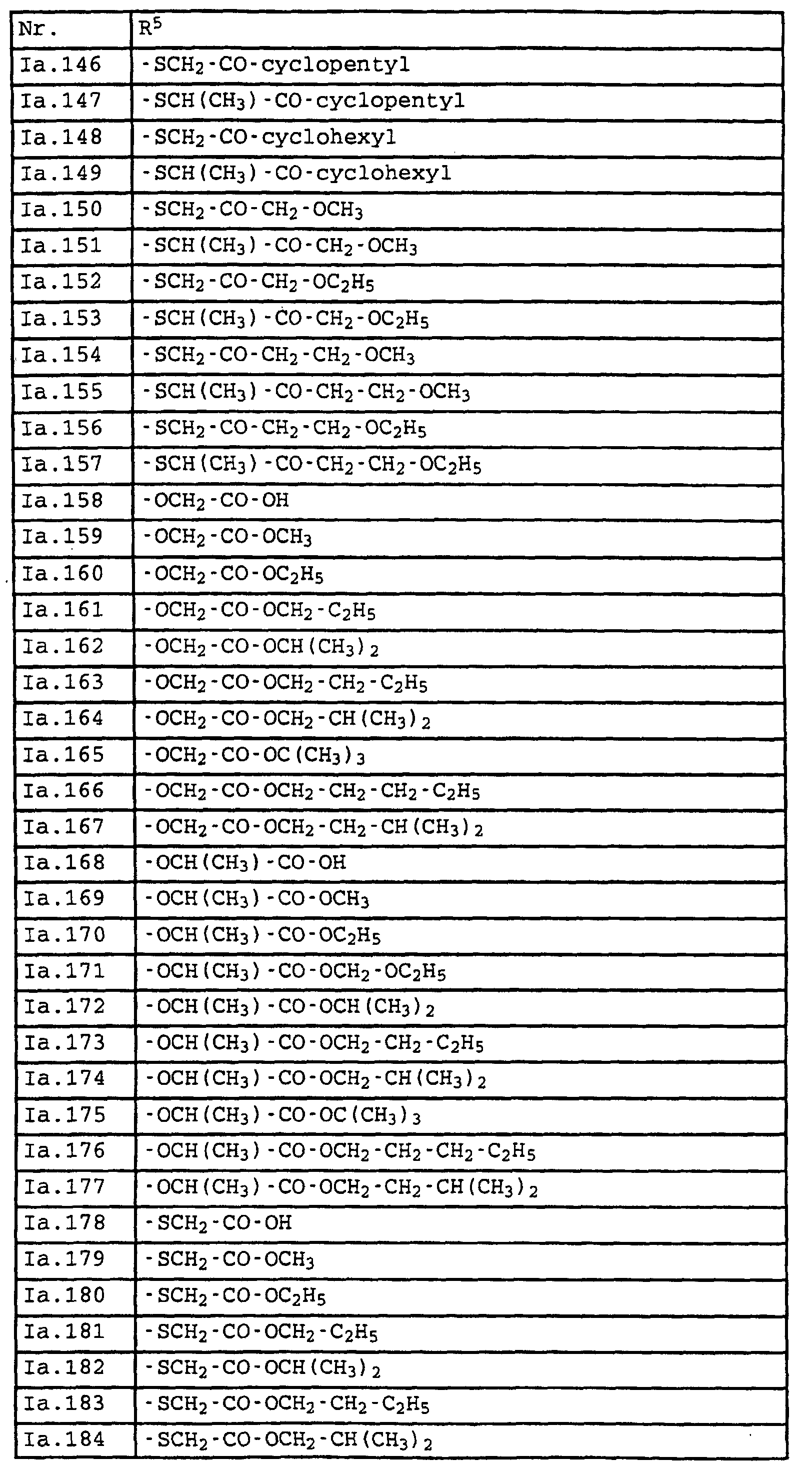

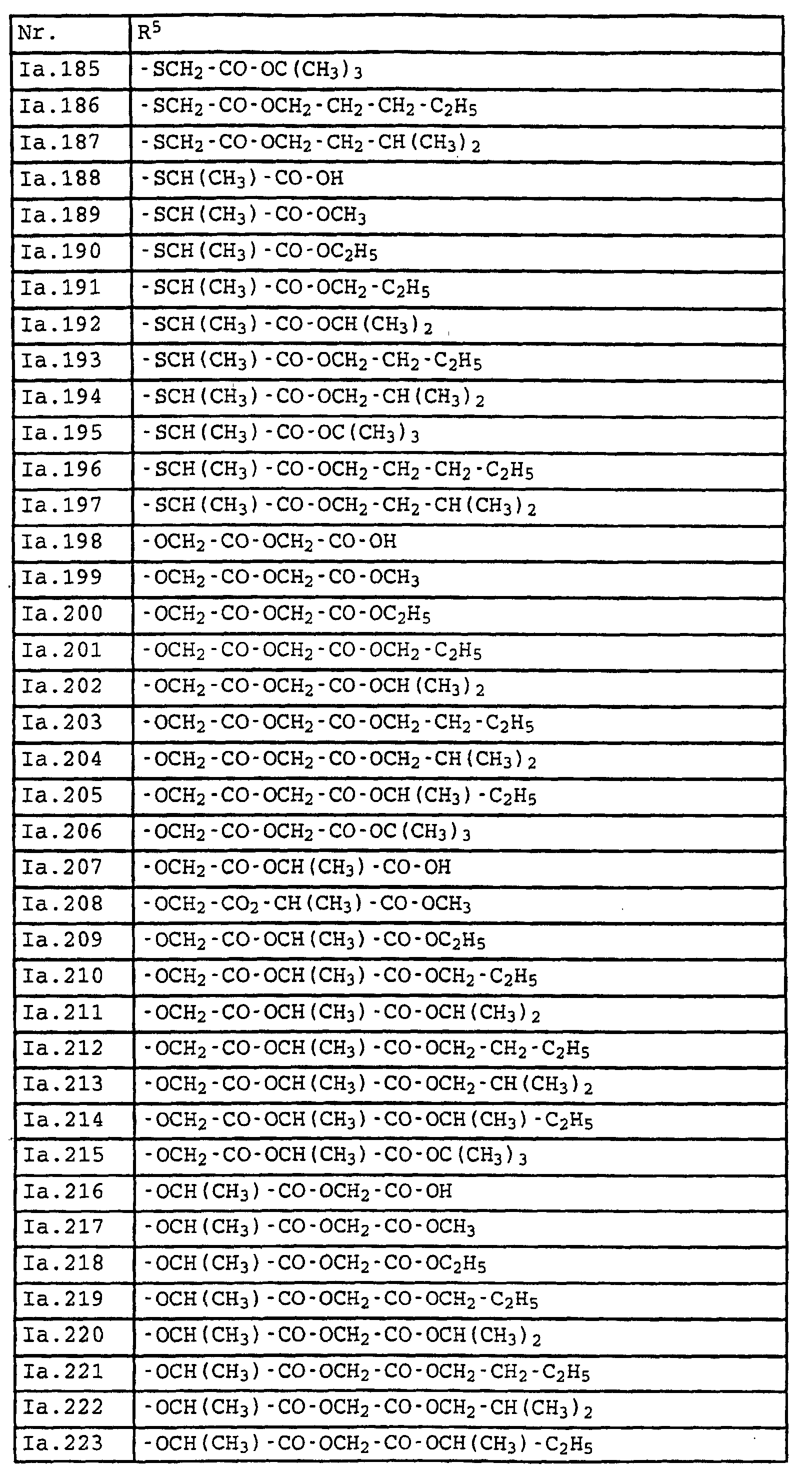

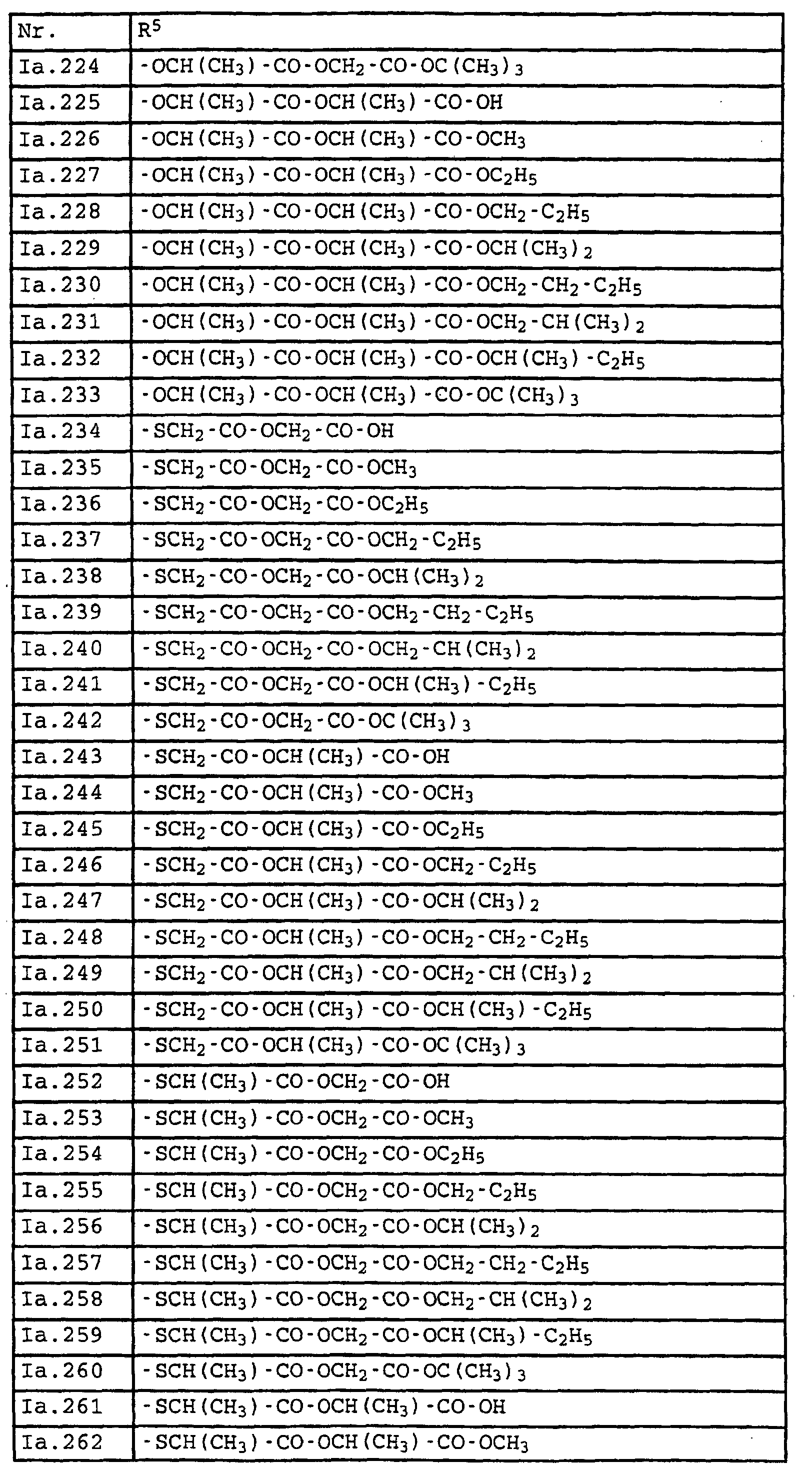

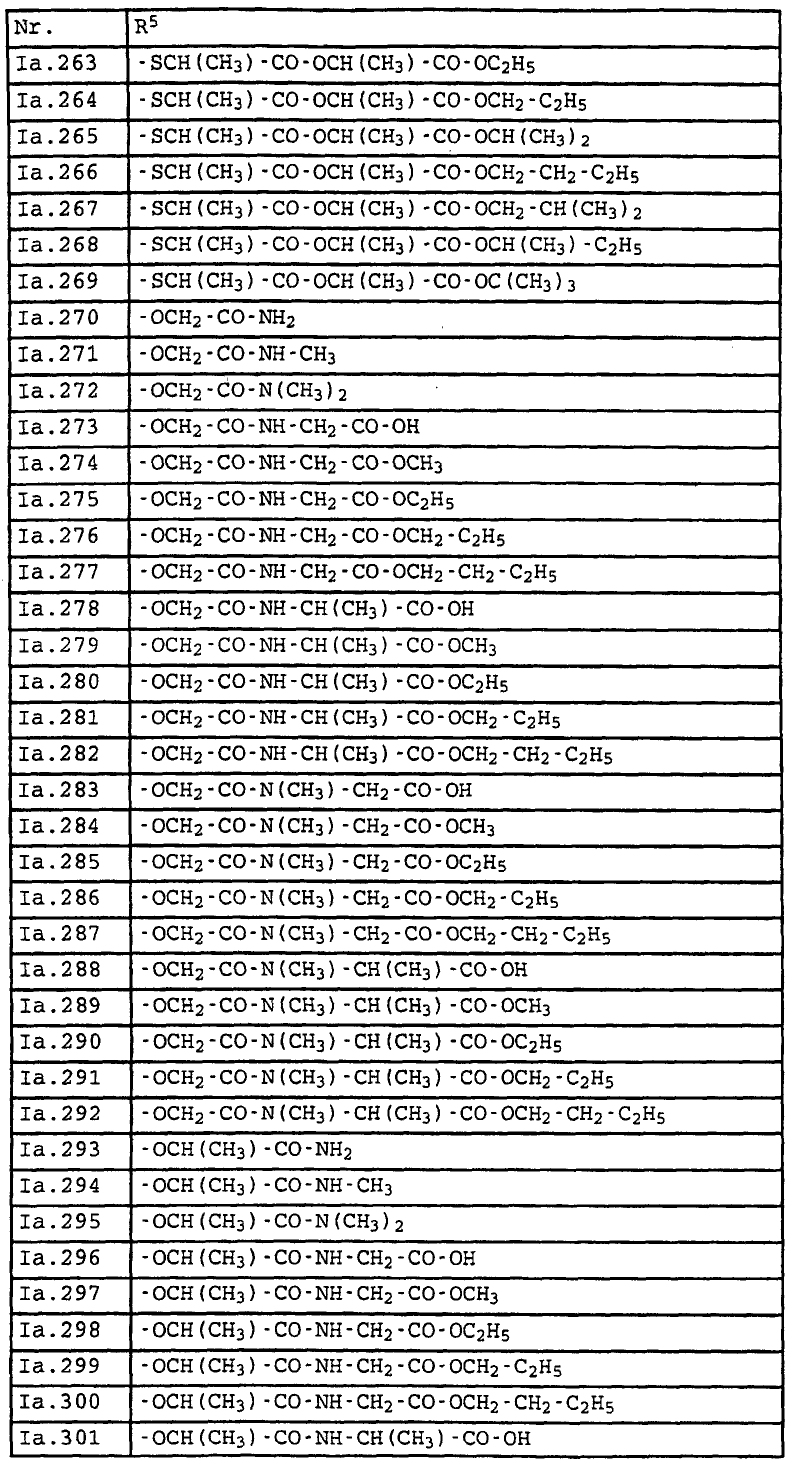

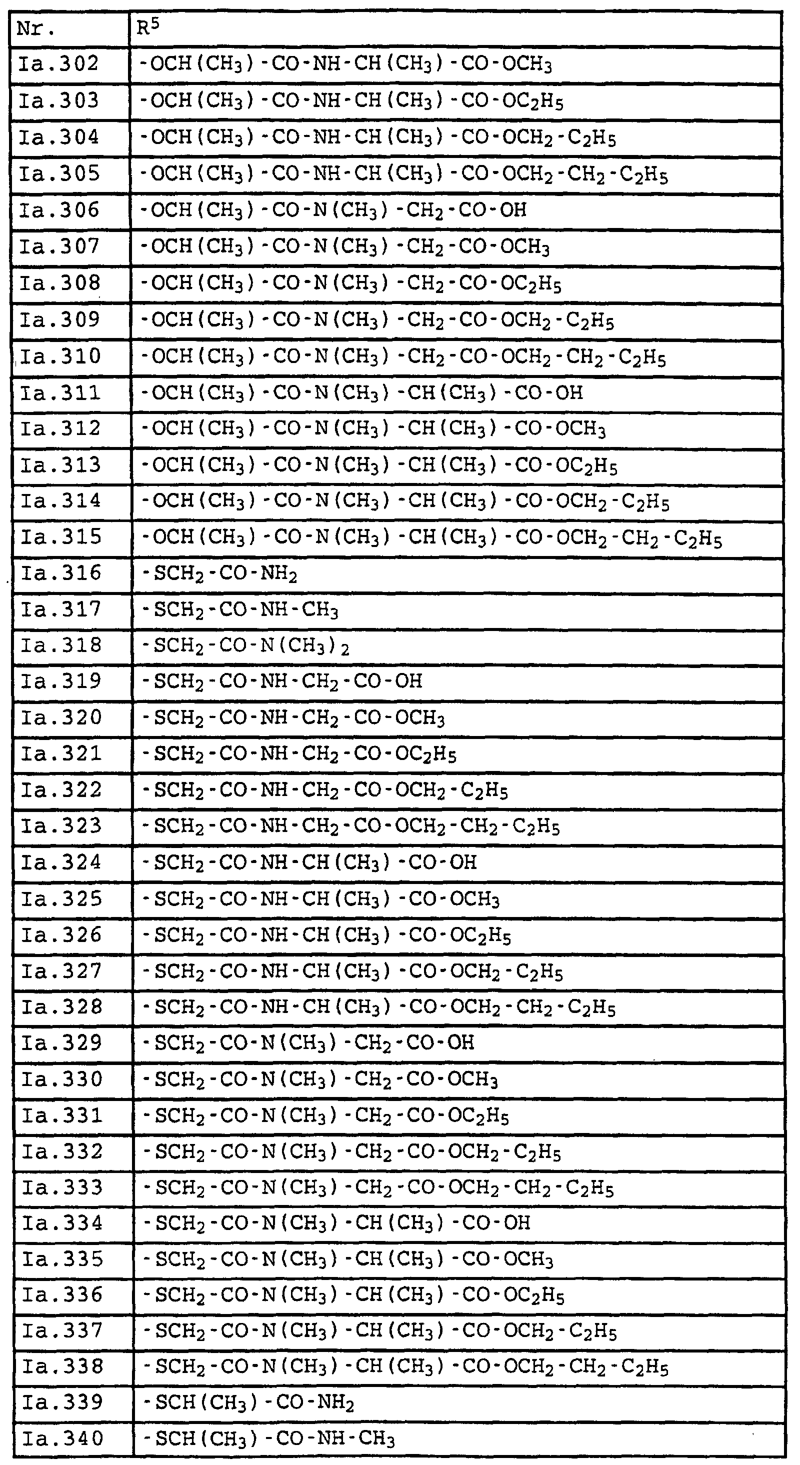

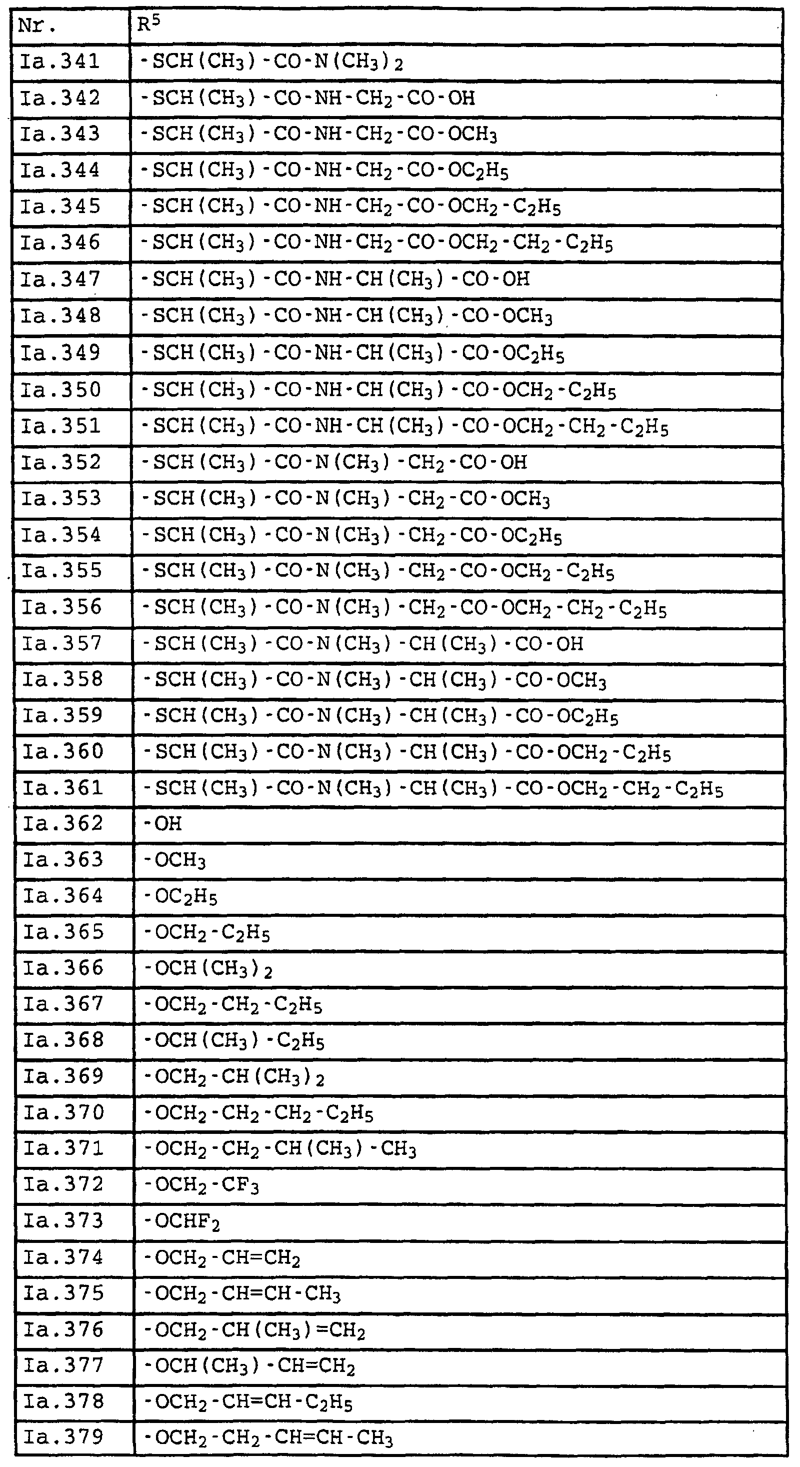

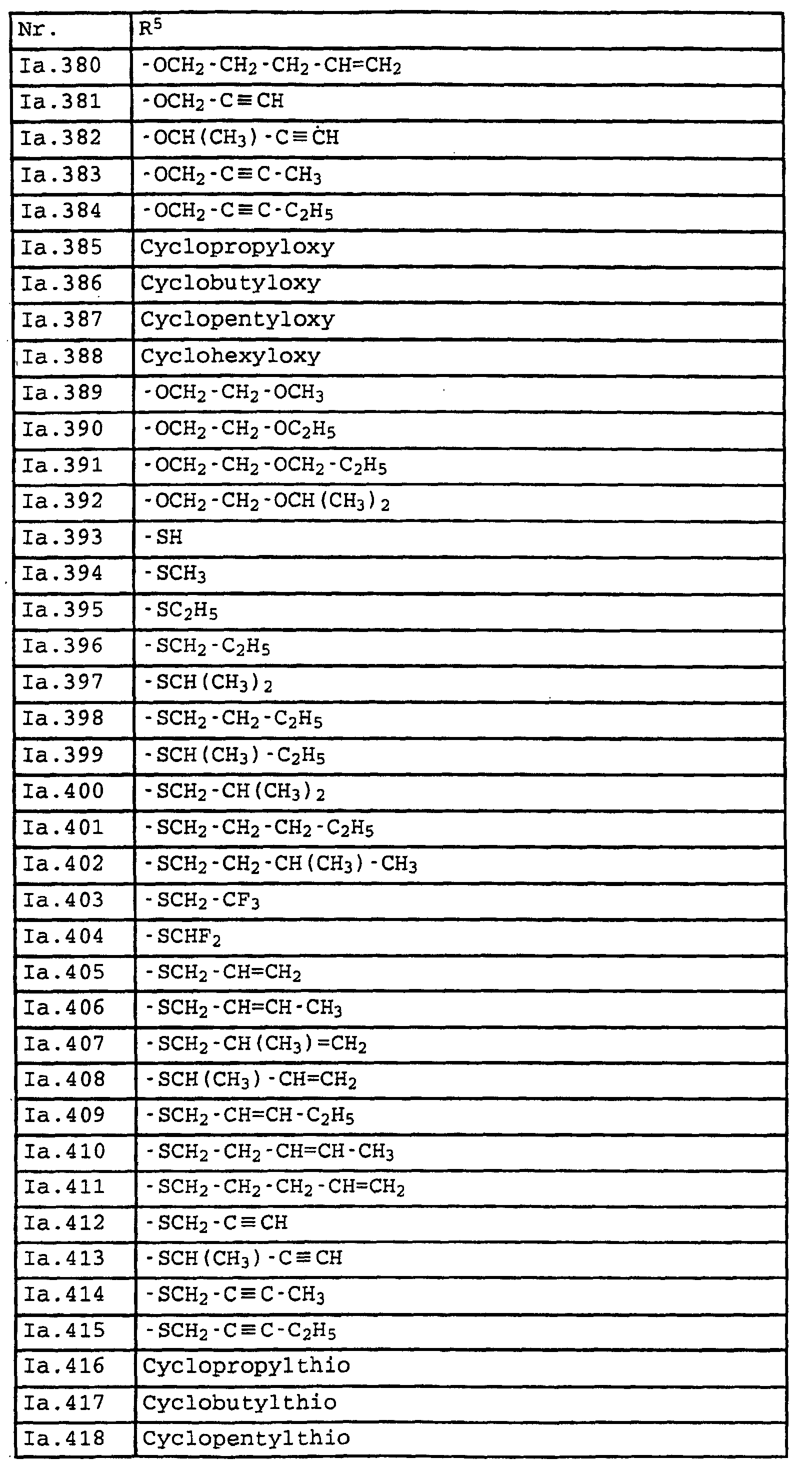

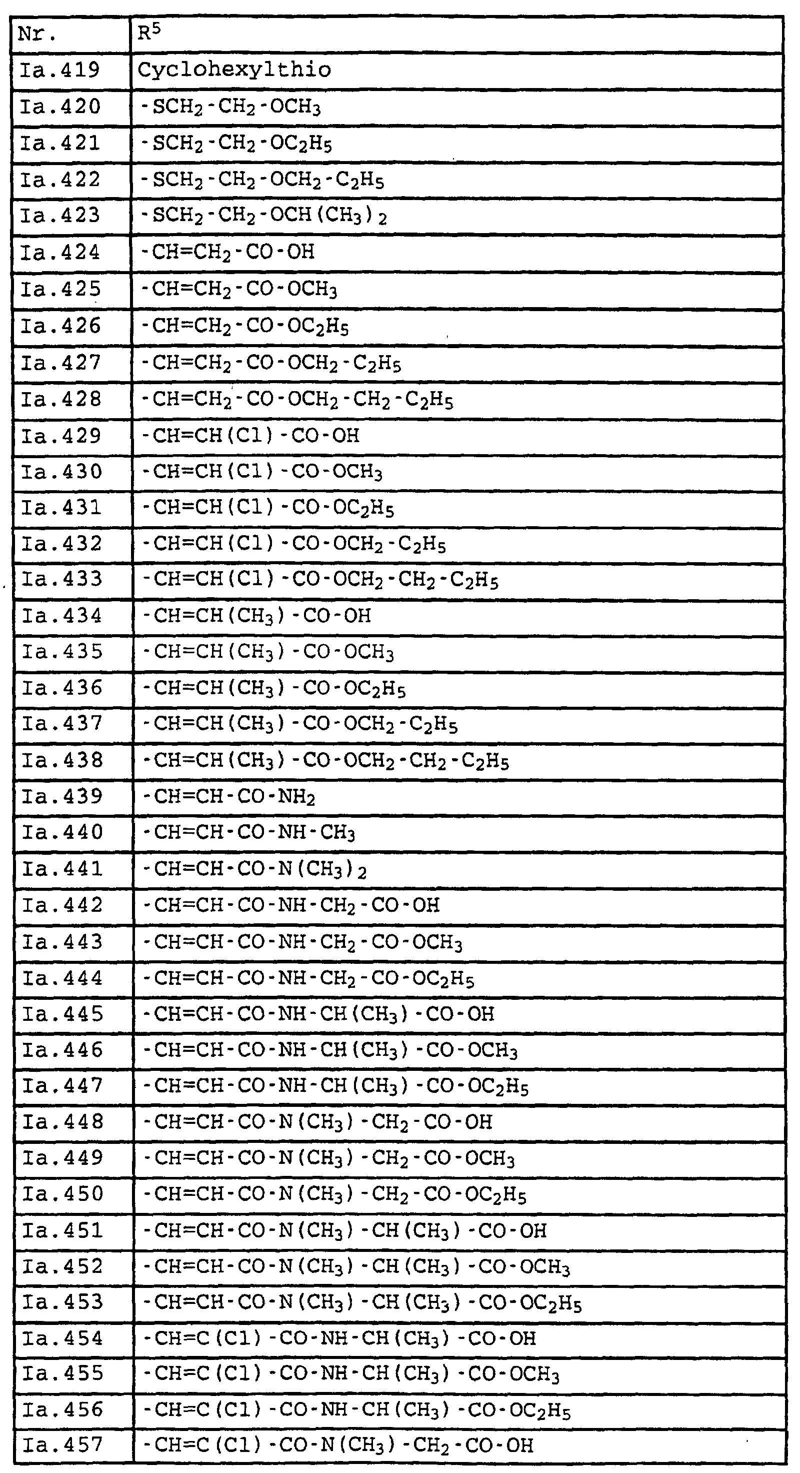

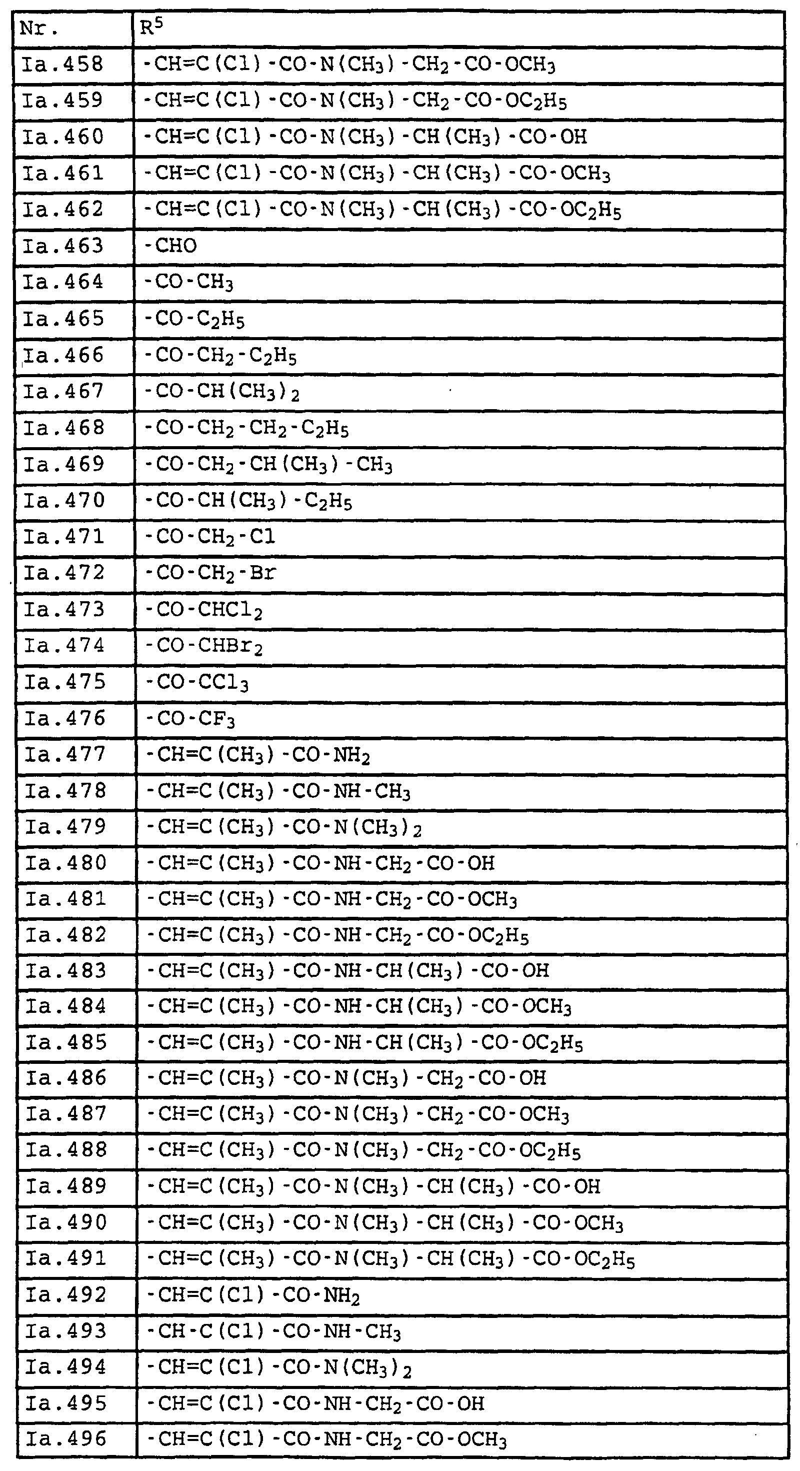

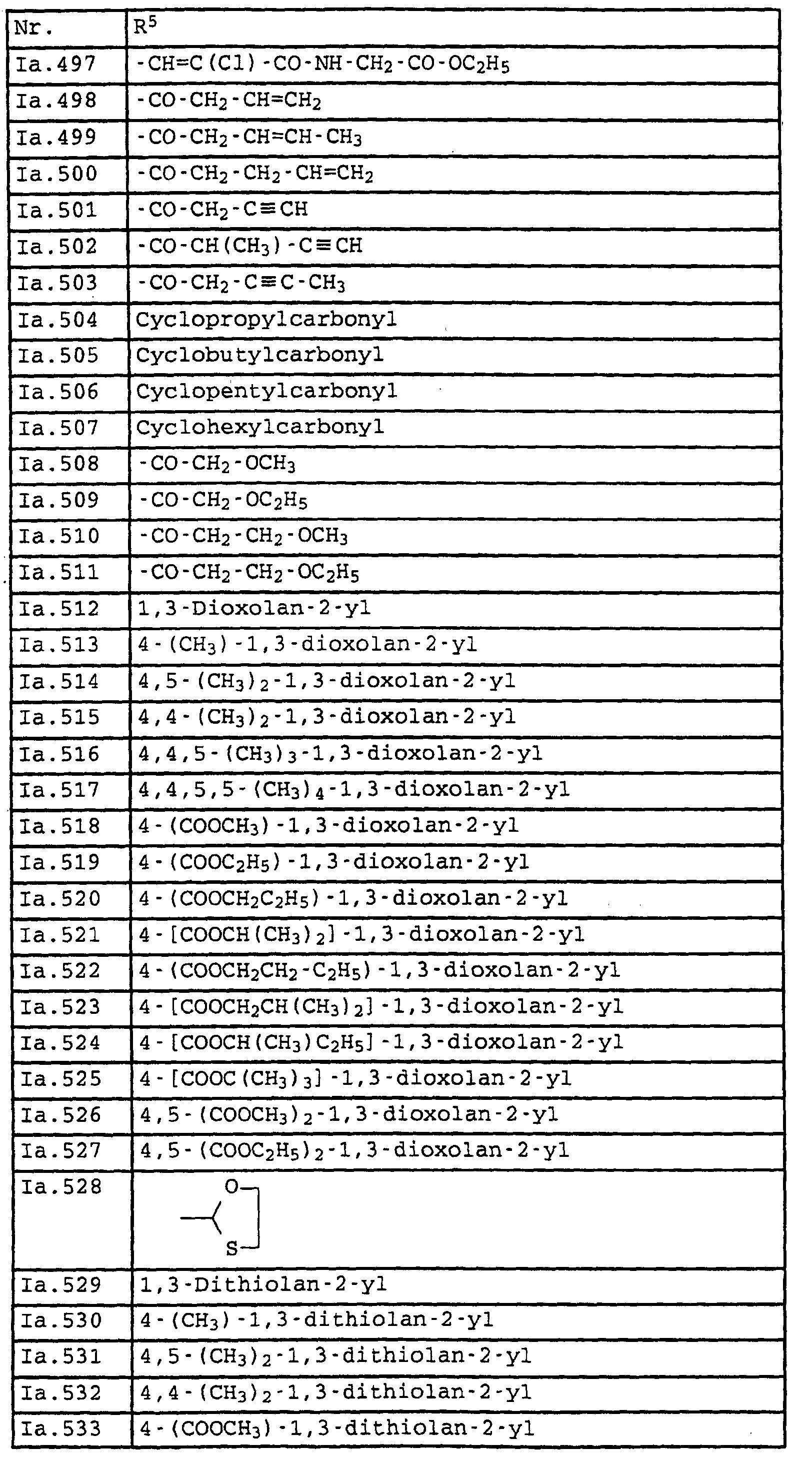

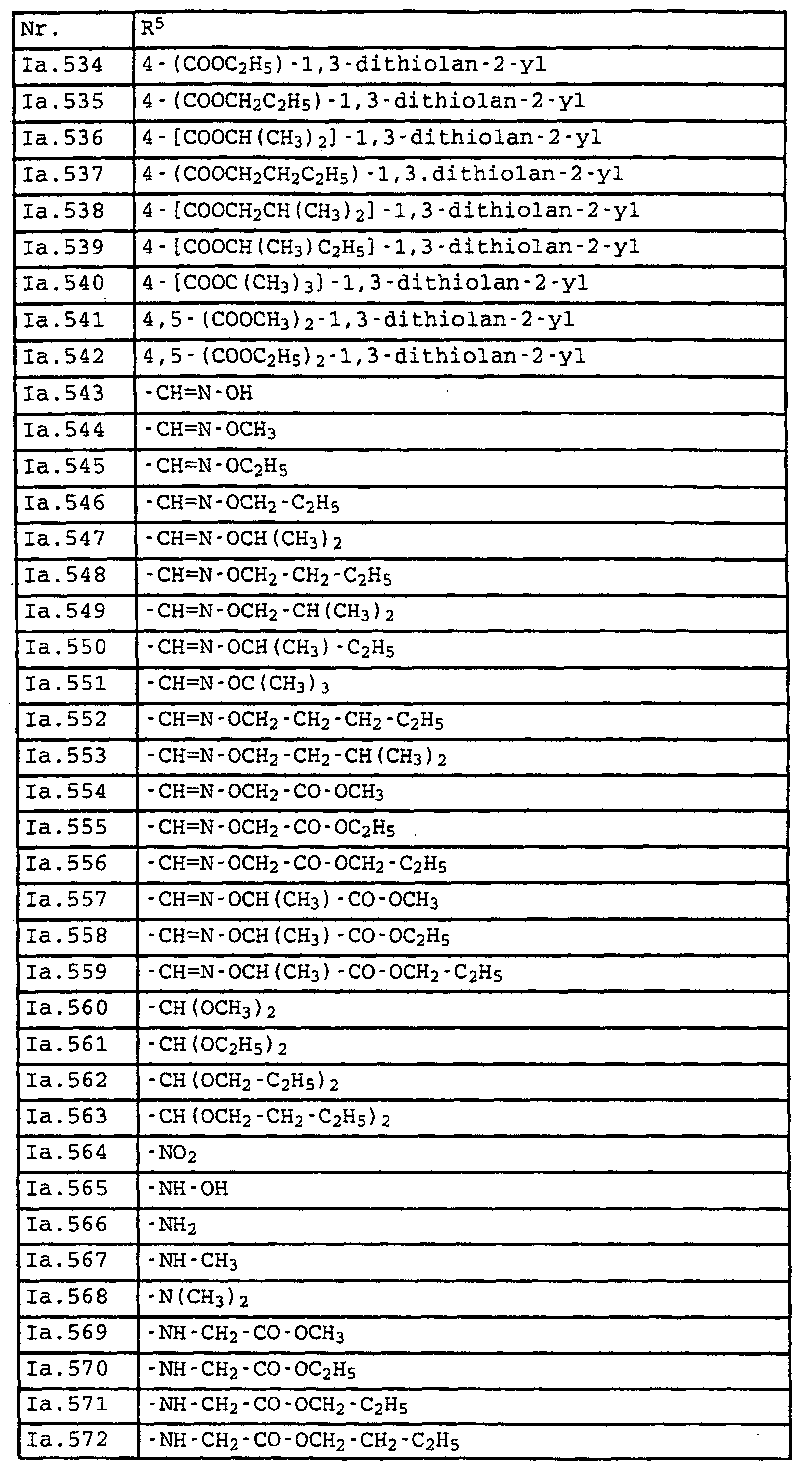

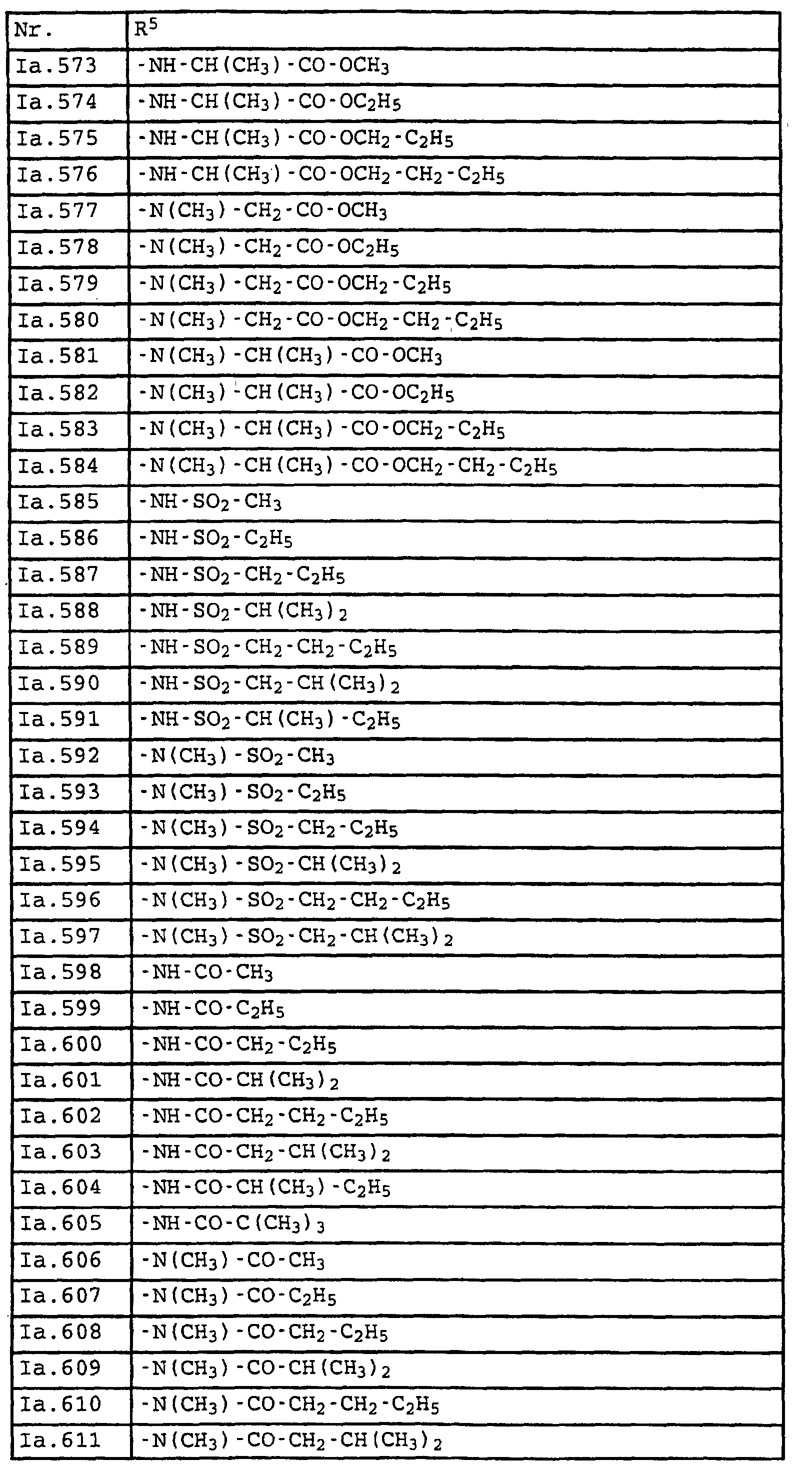

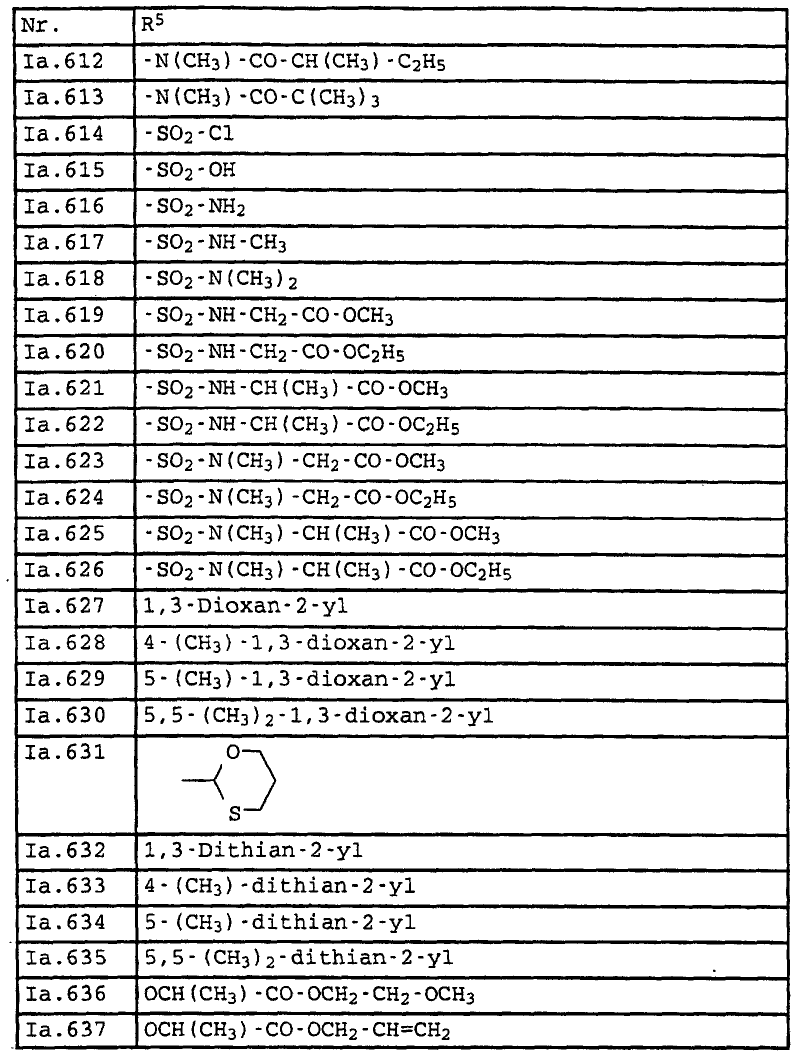

Des weiteren sind die substituierten 2-Phenylpyridine der Formeln Ib, Ic, Id, le und If ganz besonders bevorzugt, insbesondere
- die Verbindungen Ib.1 bis Ib.637, die sich von den entsprechenden Verbindungen Ia.1 bis Ia.637 lediglich dadurch unterscheiden, daß R³ für Chlor steht: 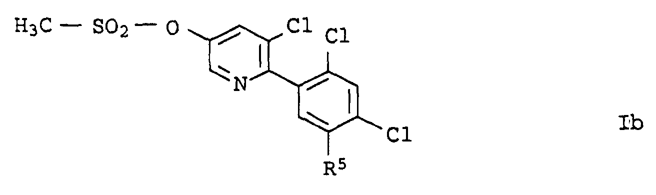
- die Verbindungen Ic.1 bis Ic.637, die sich von den entsprechenden Verbindungen Ia.1 bis Ia.637 lediglich dadurch unterscheiden, daß R³ für Wasserstoff steht: 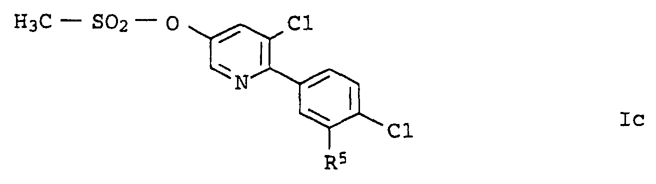
- die Verbindungen Id.1 bis Id.637, die sich von den entsprechenden Verbindungen Ia.1 bis Ia.637 lediglich dadurch unterscheiden, daß R⁴ für Cyano steht: 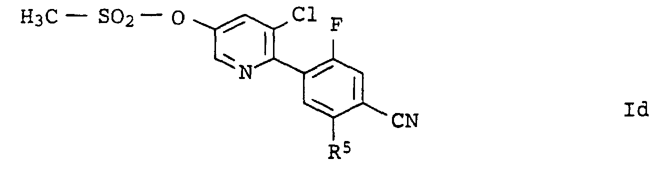
- die Verbindungen Ie.1 bis Ie.637, die sich von den entsprechenden Verbindungen Ia.1 bis Ia.637 lediglich dadurch unterscheiden, daß R³ für Chlor und R⁴ für Cyano stehen: 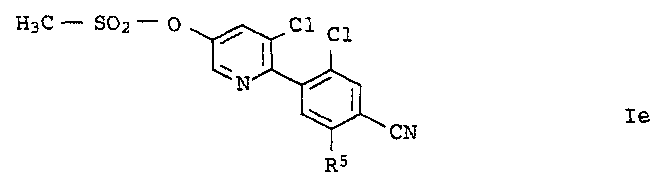
- die Verbindungen If.1 bis If.637, die sich von den entsprechenden Verbindungen Ia.1 bis Ia.637 lediglich dadurch unterscheiden, daß R³ für Wasserstoff und R⁴ für Cyano stehen:

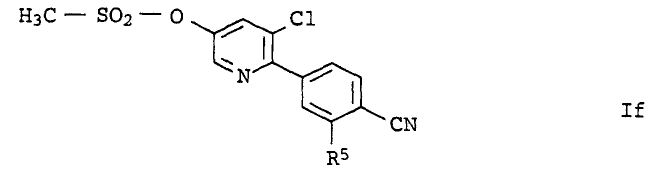

Die substituierten 2-Phenylpyridine der Formel I sind auf verschiedene Weise erhältlich, beispielsweise nach einem der folgenden Verfahren:

### Verfahren A⁾

Oxidation von substituierten 2-Phenylpyridinen der Formel I, bei denen n Null bedeutet und R¹ und R⁵ keinen oxidierbaren Schwefel enthalten, auf an sich bekannte Weise {vgl. z.B. A. Albini & S. Pietra, Heterocyclic N-Oxides, CRC-Press Inc., Boca Raton, USA 1991; H.S. Mosher et al., Org. Synth. Coll. Vol. IV 1963, Seite 828; E.C. Taylor et al., Org. Synth. Coll. Vol. IV 1963, Seite 704; T.W. Bell et. al., Org. Synth. 69, Seite 226 (1990)}: 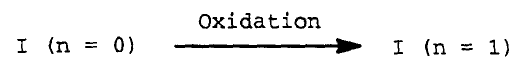
Unter den zur Oxidation des Pyridinrings üblichen Oxidationsmittein sei beispielhaft auf Peressigsäure, Trifluorperessigsäure, Perbenzoesäure, m-Chlorperbenzoesäure, Monopermaleinsäure, Magnesiummonoperphthalat, Natriumperborat, Oxone® (enthält Peroxidisulfat), Perwolframsäure und Wasserstoffperoxid verwiesen.
Geeignete Lösungsmittel sind z.B. Wasser, Schwefelsäure, Carbonsäuren wie Essigsäure und Trifluoressigsäure sowie halogenierte Kohlenwasserstoffe wie Dichlormethan und Chloroform.
Normalerweise gelingt die Oxidation bei Temperaturen von 0°C bis Siedetemperatur des Reaktionsgemisches.
Das Oxidationsmittel wird normalerweise in mindestens äquimolaren Mengen, bezogen auf die Ausgangsverbindung, eingesetzt. Im allgemeinen hat sich ein Überschuß an Oxidationsmittel als besonders vorteilhaft erwiesen.

### Verfahren B⁾

Übergangsmetall-katalysierte Kreuzkupplungsreaktion von 2-Halogenpyridinen II (Hal = Chlor oder Brom) mit metallorganischen Verbindungen der Formel III auf an sich bekannte Weise {vgl. z.B. WO 95/02580 und die dort auf den Seiten 21 und 22 zitierte Literatur}: 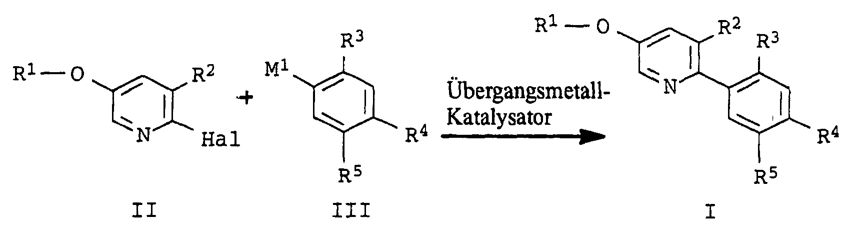
M¹ steht für B(OH)₂, Mg-Cl, Mg-Br, Mg-J, Zn-Cl, Zn-Br, Zn-J, Lithium, Kupfer oder Zinntri(C₁-C₄-alkyl), vorzugsweise für B(OH)₂, Mg-Cl, Mg-Br, Mg-J, Zn-Cl, Zn-Br oder Zn-J.
Alternativ können statt der Boronsäuren III {M¹ = B(OH)₂} auch die Boroxine IV eingesetzt werden: 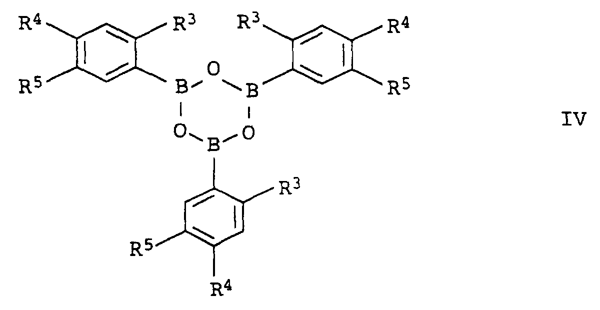
Als Katalysatoren kommen insbesondere Palladiumkatalysatoren wie Tetrakis-(triphenylphosphin)-palladium(O), Bis-(triphenylphosphin)-palladium(II)-chlorid, 1,4-Bis-(diphenylphosphino)-butan-palladium(II)-chlorid, 1,2-Bis-(diphenylphosphino)-ethanpalladium(II)-chlorid, Palladium(II)-acetat + Triphenylphosphin, Palladium(II)-acetat + Tri-(o-tolyl)-phosphin oder Palladium auf Aktivkohle, und Nickelkatalysatoren wie Bis-(triphenylphosphin)-nickel(II)-chlorid, 1,3-Bis-(diphenylphosphino)-propan-nickel(II)-chlorid oder Nickel(II)-acetylacetonat in Betracht.

### Verfahren C⁾

Diazotierung von 5-Amino-2-phenylpyridinen V, Umsetzung der Diazoniumsalze mit Acetanhydridid, Verseifung von VI zum 5-Hydroxy-2-phenylpyridin VII und Umsetzung von VII mit R¹-L, wobei L eine geeignete Abgangsgruppe wie Chlorid (im Falle von R¹ = C₁-C₆-Alkylsulfonyl) ist: 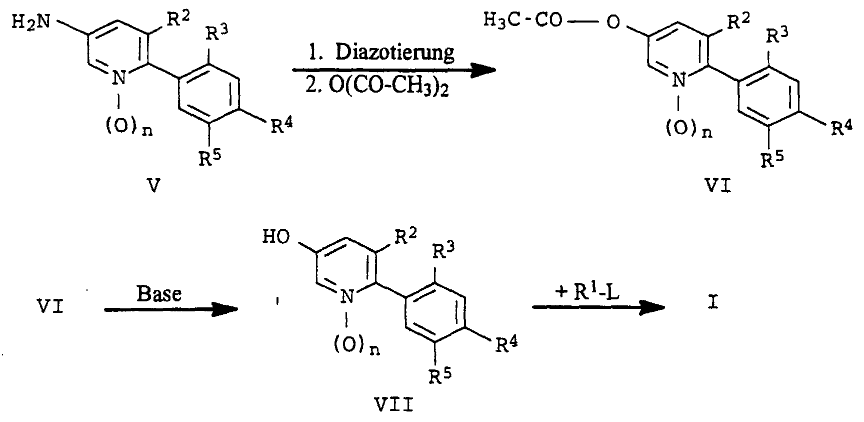
Umsetzungen dieser Art sind allgemein bekannt, beispielsweise aus den folgenden Veröffentlichungen (Diazotierung von Aminopyridinen mit Isoamylnitrit):
   C.S. Giam et al., J. Chem. Soc., Chem. Commun. 16, 756 (1980); T. Yasumitsu et al., J. Org. Chem. 46, 3564-3567 (1981).
Die 5-Amino-2-phenylpyridine der Formel V sind aus der WO 98/07700 bekannt oder auf die dort beschriebene Weise erhältlich. 5-Amino-2-(4-chlor-3-methoxyphenyl)-pyridin und 5-Amino-2-(4-chlor-3-methoxyphenyl)-3-chlorpyridin sind bereits aus der WO 95/02580 bekannt.

### Verfahren D⁾

Umsetzung von 5-Hydroxy-2-phenylpyridinen VIII mit einem C₁-C₆-Alkylsulfinylchlorid R¹-SO-Cl auf an sich bekannte Weise {vgl. z.B. J. Hendrickson & P. Skipper, Tetrahedron 32, 1627 (1976); Th. Netscher & H. Prinzbach, Synthesis 8, 683-688 (1987); Y. F. Zhang et al., Inorg. Chem. 31, 492-494 (1992), M. Jung & T. Lazarova, Tetrahedron Letters 37, 7-8 (1996)}:

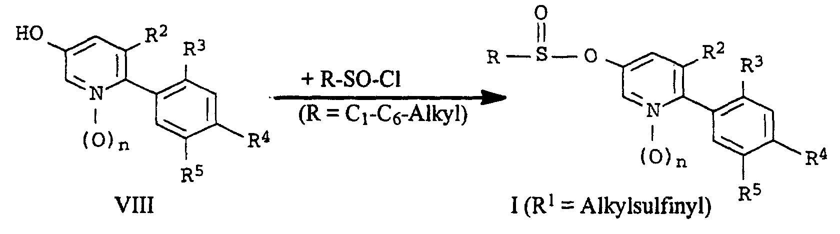

### Verfahren E⁾

Oxidation von substituierten 2-Phenylpyridinen der Formel I, bei denen R¹ für C₁-C₆-Alkylsulfinyl steht und der Substituent R⁵ keinen oxidierbaren Schwefel enthält, auf an sich bekannte Weise {vgl. z.B. Th. Squires et al. et al., J. Org. Chem. 46, 2373-2376 (1981) sowie Th. Netscher & H. Prinzbach, Synthesis 8, 683-688 (1987)}: 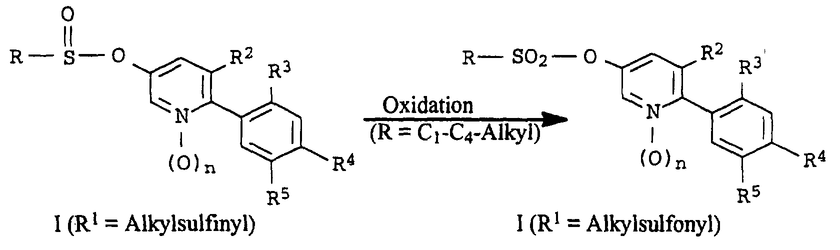
Bezüglich geeigneter Lösungsmittel, Reaktionstemperaturen und Mengenverhältnissen sei auf die Angaben bei Verfahren A) verwiesen. Neben den bei Verfahren A) genannten Oxidationsmitteln kommen hier auch Alkalimetallhypohalogenide wie Natrium- und Kaliumhypochlorid in Betracht.
Normalerweise sind die substituierten 2-Phenylpyridine I nach einem der vorstehend genannten Syntheseverfahren herstellbar. Aus wirtschaftlichen oder verfahrenstechnischen Gründen kann es jedoch zweckmäßiger sein, einige Verbindungen I aus ähnlichen 2-Phenylpyridinen, die sich jedoch in der Bedeutung eines Restes unterscheiden, herzustellen.

Die Verbindungen der Formel IIa 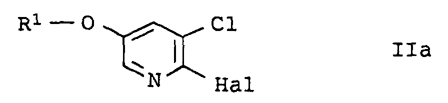 sind neu.

Allgemein kann die Herstellung der 2-Halogenpyridine II z.B. durch Diazotierung der entsprechenden 5-Aminopyridine IX ¹⁾ - vorzugsweise mit einem Salpetrigsäureester wie tert.-Butylnitrit und Isopentylnitrit - und anschließender Umsetzung des Diazoniumsalzes mit Acetanhydrid analog Verfahren C₎ erfolgen: 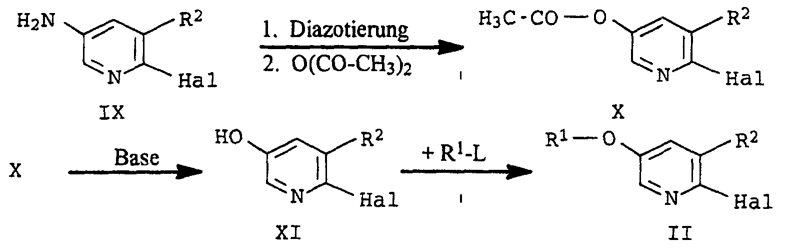
Vorzugsweise arbeitet man in einem wasserfreien System, beispielsweise in Eisessig, der Chlorwasserstoff enthält, in Dioxan, absolutem Ethanol, Tetrahydrofuran, Acetonitril oder in Aceton.
   Die Reaktionstemperatur liegt normalerweise bei (-30) bis 80°C.
Üblicherweise werden die Komponenten der Diazotierungsreaktion in etwa stöchiometrischem Verhältnis eingesetzt, jedoch kann auch ein Überschuß einer der Komponenten, z.B. im Hinblick auf eine möglichst vollständige Umsetzung der anderen Komponente, vorteilhaft sein. Bevorzugt verwendet man das Nitrit im Überschuß, bis etwa zur 2fachen molaren Menge, bezogen auf die Menge an IX.
Das Acetanhydrid wird zweckmäßig in ca. äquimolaren Mengen oder im Überschuß, bezogen auf das Diazoniumsalz, eingesetzt.
   Im allgemeinen hat sich ein großer Überschuß an Acetanhydrid (bis etwa zur 100fachen molaren Menge), bezogen auf die Menge an Diazoniumsalz, als besonders vorteilhaft erwiesen.
Die 2-Halogenpyridine II mit R¹ = C₁-C₆-Alkylsulfinyl können anschließend zu den entsprechenden Verbindungen II mit R¹ = C₁-C₆-Alkylsulfonyl oxidiert werden, wie es unter Verfahren E⁾ für die Verbindungen I mit R¹ = C₁-C₆-Alkylsulfinyl beschrieben wurde.

¹⁾ zu deren Herstellung siehe J. Med. Chem. 16, 319-327 (1973)

Sofern nicht anders angegeben werden alle vorstehend beschriebenen Verfahren zweckmäßigerweise bei Atmosphärendruck oder unter dem Eigendruck des jeweiligen Reaktionsgemisches vorgenommen.

Die Aufarbeitung der Reaktionsgemische erfolgt in der Regel nach an sich bekannten Methoden, beispielsweise
durch Verdünnen der Reaktionslösung mit Wasser und anschließender Isolierung des Produktes mittels Filtration, Kristallisation oder Lösungsmittelextraktion, oder
durch Entfernen des Lösungsmittels, Verteilen des Rückstandes in einem Gemisch aus Wasser und einem geeigneten organischen Lösungsmittel und Aufarbeiten der organischen Phase auf das Produkt hin.

Die substituierten 2-Phenylpyridine I können bei der Herstellung als Isomerengemische anfallen, die jedoch gewünschtenfalls nach den hierfür üblichen Methoden wie Kristallisation oder Chromatographie, auch an einem optisch aktiven Adsorbat, in die weitgehend reinen Isomeren getrennt werden können. Reine optisch aktive Isomere lassen sich vorteilhaft aus entsprechenden optisch aktiven Ausgangsprodukten herstellen.

Landwirtschaftlich brauchbare Salze der Verbindungen I können durch Reaktion mit einer Base des entsprechenden Kations, vorzugsweise einem Alkalimetallhydroxid oder -hydrid, gebildet werden.

Salze von I, deren Metallion kein Alkalimetallion ist, können auch durch Umsalzen des entsprechenden Alkalimetallsalzes in üblicher Weise hergestellt werden, ebenso Ammonium-, Phosphonium-, Sulfonium- und Sulfoxoniumsalze mittels Ammoniak, Phosphonium-, Sulfonium- oder Sulfoxoniumhydroxiden.

Die Verbindungen I und deren landwirtschaftlich brauchbaren Salze eignen sich - sowohl als Isomerengemische als auch in Form der reinen Isomeren - als Herbizide. Die I enthaltenden herbiziden Mittel bekämpfen Pflanzenwuchs auf Nichtkulturflächen sehr gut, besonders bei hohen Aufwandmengen. In Kulturen wie Weizen, Reis, Mais, Soja und Baumwolle wirken sie gegen Unkräuter und Schadgräser, ohne die Kulturpflanzen nennenswert zu schädigen. Dieser Effekt tritt vor allem bei niedrigen Aufwandmengen auf.

In Abhängigkeit von der jeweiligen Applikationsmethode können die Verbindungen I bzw. sie enthaltenden herbiziden Mittel noch in einer weiteren Zahl von Kulturpflanzen zur Beseitigung unerwünschter Pflanzen eingesetzt werden. In Betracht kommen beispielsweise folgende Kulturen:
Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N. rustica), Olea europaea, Oryza sativa , Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Darüber hinaus können die Verbindungen I auch in Kulturen, die durch Züchtung einschließlich gentechnischer Methoden gegen die Wirkung von Herbiziden tolerant sind, verwandt werden. Des weiteren eignen sich die substituierten 2-Phenylpyridine I auch zur Desikkation und/oder Defoliation von Pflanzen.

Als Desikkantien eignen sie sich insbesondere zur Austrocknung der oberirdischen Teile von Kulturpflanzen wie Kartoffel, Raps, Sonnenblume und Sojabohne. Damit wird ein vollständig mechanisches Beernten dieser wichtigen Kulturpflanzen ermöglicht.

Von wirtschaftlichem Interesse ist ferner die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- oder Blatt- und Sproßteil der Pflanzen ist auch für ein gut kontrollierbares Entblättern von Nutzpflanzen, insbesondere Baumwolle, wesentlich.

Außerdem führt die Verkürzung des Zeitintervalls, in dem die einzelnen Baumwollpflanzen reif werden, zu einer erhöhten Faser-Qualität nach der Ernte.

Die Verbindungen I bzw. die sie enthaltenden Mittel können beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Als inerte Hilfsstoffe kommen im wesentlichen in Betracht: Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z.B. Amine wie N-Methylpyrrolidon und Wasser.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe (Adjuvantien) kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der Wirkstoffe I in den anwendungsfertigen Zubereitungen können in weiten Bereichen variiert werden. Im allgemeinen enthalten die Formulierungen etwa von 0,001 bis 98 Gew.-%, vorzugsweise 0,01 bis 95 Gew.-%, mindestens eines Wirkstoffs. Die Wirkstoffe werden dabei in einer Reinheit von 90% bis 100%, vorzugsweise 95% bis 100% (nach NMR-Spektrum) eingesetzt.

Die folgenden Formulierungsbeispiele verdeutlichen die Herstellung solcher Zubereitungen:
I. 20 Gewichtsteile der Verbindung Nr. Ia.363 werden in einer Mischung gelöst, die aus 80 Gewichtsteilen alkyliertem Benzol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Rizinusöl besteht. Durch Ausgießen und feines Verteilen der Lösung in 100000 Gewichtsteilen Wasser erhält man eine wäßrige Dispersion, die 0,02 Gew.-% des Wirkstoffs enthält.
II. 20 Gewichtsteile der Verbindung Nr. Ia.362 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Rizinusöl besteht. Durch Eingießen und feines Verteilen der Lösung in 100000 Gewichtsteilen Wasser erhält man eine wäßrige Dispersion, die 0,02 Gew.-% des Wirkstoffs enthält.
III. 20 Gewichtsteile des Wirkstoffs Nr. Ia.374 werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Rizinusöl besteht. Durch Eingießen und feines Verteilen der Lösung in 100000 Gewichtsteilen Wasser erhält man eine wäßrige Dispersion, die 0,02 Gew.-% des Wirkstoffs enthält.
IV. 20 Gewichtsteile des Wirkstoffs Nr. Ia.363 werden mit 3 Gewichtsteilen des Natriumsalzes der Diisobutylnaphthalin-α-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20000 Gewichtsteilen Wasser erhält man eine Spritzbrühe, die 0,1 Gew.-% des Wirkstoffs enthält.
V. 3 Gewichtsteile des Wirkstoffs Nr. Ia.362 werden mit 97 Gewichtsteilen feinteiligem Kaolin vermischt. Man erhält auf diese Weise ein Stäubemittel, das 3 Gew.-% des Wirkstoffs enthält.
VI. 20 Gewichtsteile des Wirkstoffs Nr. Ia.374 werden mit 2 Gewichtsteilen Calciumsalz der Dodecylbenzolsulfonsäure, 8 Gewichtsteilen Fettalkohol-polyglykolether, 2 Gewichtsteilen Natriumsalz eines Phenol-Harnstoff-Formaldehyd-Kondensates und 68 Gewichtsteilen eines paraffinischen Mineralöls innig vermischt. Man erhält eine stabile ölige Dispersion.
VII. 1 Gewichtsteil des Wirkstoffs Nr. Ia.363 wird in einer Mischung gelöst, die aus 70 Gewichtsteilen Cyclohexanon, 20 Gewichtsteilen ethoxyliertem Isooctylphenol und 10 Gewichtsteilen ethoxyliertem Rizinusöl besteht. Man erhält ein stabiles Emulsionskonzentrat.
VIII. 1 Gewichtsteil des Wirkstoffs Nr. Ia.374 wird in einer Mischung gelöst, die aus 80 Gewichtsteilen Cyclohexanon und 20 Gewichtsteilen Wettol® EM 31 (= nichtionischer Emulgator auf der Basis von ethoxyliertem Rizinusöl; BASF AG) besteht. Man erhält ein stabiles Emulsionskonzentrat.

Die Applikation der Wirkstoffe I bzw. der herbiziden Mittel kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff I betragen je nach Bekämpfungsziel, Jahreszeit, Zielpflanzen und Wachstumsstadium 0,001 bis 3,0, vorzugsweise 0,01 bis 1,0 kg/ha aktive Substanz (a.S.).

Zur Verbreiterung des Wirkungsspektrums und zur Erzielung synergistischer Effekte können die substituierten 2-Phenylpyridine I mit zahlreichen Vertretern anderer herbizider oder wachstumsregulierender Wirkstoffgruppen gemischt und gemeinsam ausgebracht werden. Beispielsweise kommen als Mischungspartner 1,2,4-Thiadiazole, 1,3,4-Thiadiazole, Amide, Aminophosphorsäure und deren Derivate, Aminotriazole, Anilide, Aryloxy-/Heteroaryloxyalkansäuren und deren Derivate, Benzoesäure und deren Derivate, Benzothiadiazinone, 2-(Hetaroyl/Aroyl)-1,3-cyclohexandione, Heteroaryl-Aryl-Ketone, Benzylisoxazolidinone, meta-CF₃-Phenylderivate, Carbamate, Chinolincarbonsäure und deren Derivate, Chloracetanilide, Cyclohexan-1,3-dionderivate, Diazine, Dichlorpropionsäure und deren Derivate, Dihydrobenzofurane, Dihydrofuran-3-one, Dinitroaniline, Dinitrophenole, Diphenylether, Dipyridyle, Halogencarbonsäuren und deren Derivate, Harnstoffe, 3-Phenyluracile, Imidazole, Imidazolinone, N-Phenyl-3,4,5,6-tetrahydrophthalimide, Oxadiazole, Oxirane, Phenole, Aryloxy- und Heteroaryloxyphenoxypropionsäureester, Phenylessigsäure und deren Derivate, 2-Phenylpropionsäure und deren Derivate, Pyrazole, Phenylpyrazole, Pyridazine, Pyridincarbonsäure und deren Derivate, Pyrimidylether, Sulfonamide, Sulfonylharnstoffe, Triazine, Triazinone, Triazolinone, Triazolcarboxamide und Uracile in Betracht.

Außerdem kann es von Nutzen sein, die Verbindungen I allein oder in Kombination mit anderen Herbiziden auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

### Herstellungsbeispiele

### Beispiel 1 (Verbindung Ia.363 in Tabelle 1):

Zu einer Lösung von 3,7 g 5-Brom-2-chlor-4-fluoranisol in 80 ml Tetrahydrofuran wurden 8,5 ml einer 2-molaren Lösung von Isopropylmagnesiumchlorid in Tetrahydrofuran getropft. Nach 30 Minuten Rühren tropfte man das erhaltene Gemisch bei 0°C zu einer Lösung von 5,7 g 3-Chlor-5-(methylsulfonyloxy)-2-(phenylsulfonyl)pyridin in 100 ml Tetrahydrofuran. Die gesamte Reaktionsmischung wurde dann 17 Std. bei ca. 20°C gerührt. Anschließend erhitzte man für 72 Stunden auf Rückflußtemperatur. Danach wurden die niedrig siedenden Anteile abdestilliert. Den Rückstand nahm man in 1 l Essigsäureethylester auf. Die organische Phase wurde noch mit 2 mal 250 ml Wasser gewaschen, über Magnesiumsulfat getrocknet und schließlich eingeengt. Die Reinigung des Rohproduktes erfolgte mittels Chromatographie an Kieselgel (Laufmittel: Essigsäureethylester/Cyclohexan (1:1). Ausbeute: 2,9 g.

### Vorstufe 1.1: 3-Chlor-2-hydroxy-5-nitropyridin

Zunächst wurden 190,9 g 2-Hydroxy-5-nitropyridin bei 50°C in 650 ml konz. Salzsäure gelöst. Hierzu tropfte man innerhalb einer Stunde eine Lösung von 42,9 g Kaliumchlorat in 600 ml Wasser. Nach Abkühlen auf ca. 20°C wurde das Gemisch noch 45 Minuten gerührt und dann auf 0°C gekühlt. Anschließend filtrierte man den Feststoffanteil ab und schlämmte ihn in 200 ml Wasser auf. Das ungelöste Produkt wurde schließlich abfiltriert und bei 50°C unter reduziertem Druck getrocknet. Ausbeute: 162,9 g; Fp.: 197-198°C.

### Vorstufe 1.2: 2,3-Dichlor-5-nitropyridin

Zu 95 g Phosphoroxitrichlorid wurden bei 0°C 39,9 g Chinolin und, nach 5 Minuten, portionsweise 108 g 3-Chlor-2-hydroxy-5-nitropyridin gegeben. Nach Zugabe von weiteren 30 ml Phosphoroxitrichlorid erhitzte man für 2 Stunden auf Rückflußtemperatur. Zur Aufarbeitung wurde das auf 50-60°C abgekühlte Reaktionsgemisch in ca. 3 l Eiswasser eingerührt. Anschließend rührte man noch 2 Stunden, bevor der entstandene Feststoffanteil abfiltriert, mit 500 ml Wasser gewaschen und bei reduziertem Druck getrocknet wurde. Ausbeute: 110,7 g.

### Vorstufe 1.3: 2,3-Dichlor-5-aminopyridin

Zu einer Lösung von 67,4 g 2,3-Dichlor-5-nitropyridin in 800 ml Tetrahydrofuran wurde 1 g Platin auf Aktivkohle gegeben. Anschließend leitete man 25 l Wasserstoff ein, wobei das Reaktionsgemisch gegen Ende der Reaktion auf 50°C erwärmt wurde. Danach filtrierte man die unlöslichen Bestandteile ab. Das Filtrat wurde eingeengt. Ausbeute: 56 g.

### Vorstufe 1.4: 2,3-Dichlor-5-azidopyridin-tetrafluoroborat

Zu einer Lösung von 98 g 2,3-Dichlor-5-aminopyridin in 600 ml 48%iger Tetrafluorborsäure wurde bei 0°C eine Lösung von 45,6 g Natriumnitrit in 100 ml Wasser getropft. Nach 1 Stunde wurde der so erhaltene Feststoff abfiltriert und - um eine schlagartige Zersetzung zu vermeiden - noch feucht weiterverarbeitet.

### Vorstufe 1.5: 5-Acetyloxy-2,3-dichlorpyridin

42 g des Diazoniumsalzes aus Vorstufe 1.4 wurden mit 300 ml Essigsäureanhydrid 1 Stunde auf Rückflußtemperatur erhitzt. Anschließend engte man ein. Nach Aufnehmen des Rückstandes in 400 ml Diethylether wurde zweimal mit je 200 ml Wasser gewaschen, über Magnesiumsulfat getrocknet und schließlich erneut eingeengt. Die Reinigung des Rohproduktes erfolgte mittels Chromatographie an Kieselgel (Laufmittel: Essigsäureethylester/Cyclohexan (1:1). Ausbeute: 16 g.

### Vorstufe 1.6: 2,3-Dichlor-5-hydroxypyridin

Zu 16 g 5-Acetyloxy-2,3-dichlorpyridin in 100 ml Eiswasser wurde bei 0°C eine Lösung von 13 g Natriumhydroxyd in 80 ml Wasser gegeben. Anschließend rührte zunächst 1 Stunde bei 0°C und dann 17 Stunden bei ca. 20°C, wonach die Reaktionsmischung mit 150 ml Essigsäureethylester gewaschen wurde. Durch Zugabe von Essigsäure säuerte man bis zu einem pH-Wert von 4-5 an, bevor dreimal mit je 100 ml Essigsäureethylester extrahiert wurde. Die vereinigten organischen Phasen trocknete man noch über Magnesiumsulfat und engte schließlich ein. Ausbeute: 12,2 g.

### Vorstufe 1.7: 2,3-Dichlor-5-(methylsulfonyloxy)pyridin

Zu 11,6 g 2,3-Dichlor-5-hydroxypyridin in 150 ml Methylenchlorid wurden bei 0°C zunächst 7,9 g Triethylamin und dann 8,5 g Methansulfonylchlorid gegeben. Anschließend rührte man 17 Stunden bei ca. 20°C, wonach die Mischung mit 100 ml Wasser gewaschen wurde. Die organische Phase trocknete man über Magnesiumsulfat und engte dann ein. Das erhaltene Rohproduktes wurde chromatographisch an Kieselgel (Laufmittel: Essigsäureethylester/Cyclohexan (1:1) gereinigt. Ausbeute: 9,1 g.

### Vorstufe 1.8: 2-Chlor-5-(methylsulfonyloxy)-2-(phenylsulfonyl)-pyridin

Eine Mischung aus 8,9 g 2,3-Dichlor-5-(methylsulfonyloxy)pyridin, 4,2 g Thiophenol und 20 mg Kupferpulver wurde 2 Stunden auf 170°C erhitzt und, nach Abkühlen auf ca. 20°C, tropfenweise mit zunächst einer Mischung aus 50 ml Eisessig und 20 ml Wasser und dann unter Kühlung mit einer Mischung aus 157 g wässriger Natriumhypochlorid-Lösung (enthaltend 13% aktives Chlor) und 50 ml Wasser versetzt. Anschließend rührte man 17 Stunden bei ca. 20°C, bevor die gesamte Reaktionsmischung in 300 ml Wasser eingerührt wurde. Man extrahierte dreimal mit je 200 ml Essigsäureethylester, wonach die vereinigten organischen Phasen über Magnesiumsulfat getrocknet und schließlich eingeengt wurden. Die Reinigung des Rohproduktes erfolgte mittels Chromatographie an Kieselgel (Laufmittel: Essigsäureethylester/Cyclohexan (1:1). Ausbeute: 5,7 g.

### Beispiel 2 (Verbindung Ia.363 in Tabelle 1):

Zu einer Mischung aus 2,3-Dichlor-5-(methylsulfonyloxy)pyridin, 4-Chlor-2-fluor-5-methoxyboronsäure und 100 ml Tetrahydrofuran wurde zunächst eine Lösung von 13,5 g Natriumhydrogencarbonat in 100 ml Wasser getropft und dann 1 g Tetrakistriphenylphosphinpalladium gegeben. Nach 14 Stunden rühren bei RückflußTemperatur gab man 150 ml Methyl-tert.-butylether in die Reaktionsmischung. Anschließend wurde die organische Phase abgetrennt. Die wässrige Phase extrahierte man zweimal mit je 150 ml Methyl-tert.-butylether. Dann wurden die vereinigten organischen Phasen noch über Magnesiumsulfat getrocknet und schließlich eingeengt. Die Reinigung des Rohproduktes erfolgte mittels Chromatographie an Kieselgel (Laufmittel: Essigsäureethylester/Cyclohexan (1:1). Ausbeute: 5,0 g.

### Beispiel 3 (Verbindung Ia.362 in Tabelle 1):

Zu 4,8 g 2-(4-Chlor-2-fluor-5-methoxyphenyl)-3-chlor-5-(methylsulfonyloxy)pyridin (Verbindung Nr. Ia.363) in 100 ml Methylenchlorid wurden 14,4 ml einer 1-molaren Lösung von Bortribromid in Methylenchlorid getropft. Anschließend rührte man 37 Std. bei ca. 20°C und 7 Std. bei Rückflußtemperatur. Dann wurden 100 ml Eiswasser in die Reaktionsmischung getropft. Nach Trennung der Phasen extrahierte man die wässrige Phase noch zweimal mit je 100 ml Methylenchlorid. Die vereinigten organischen Phasen wurden schließlich über Magnesiumsulfat getrocknet und dann eingeengt. Die Reinigung des Rohproduktes erfolgte mittels Chromatographie an Kieselgel (Laufmittel: Essigsäureethylester/Cyclohexan (1:1). Ausbeute: 3,2 g.

### Beispiel 4 (Verbindung Ia.374 in Tabelle 1):

Zu 0,6 g 2-(4-Chlor-2-fluor-5-hydroxyphenyl)-3-chlor-5-(methylsulfonyloxy)pyridin (Verbindung Nr. Ia.362) in 100 ml Dimethylformamid wurden nacheinander 0,3 g Kaliumcarbonat und 0,25 g Allylbromid gegeben. Anschließend rührte man 17 Stunden bei ca. 20°C, wonach das Reaktionsgemisch in 300 ml Wasser eingetragen wurde. Das entstandene Wertprodukt extrahierte man mit dreimal 150 ml Methyl-tert.-butylether. Die vereinigten organischen Phasen wurden noch über Magnesiumsulfat getrocknet und schließlich eingeengt. Die Reinigung des Rohproduktes erfolgte mittels Chromatographie an Kieselgel (Laufmittel: Essigsäureethylester/Cyclohexan (1:1). Ausbeute: 80 mg.

In der folgenden Tabelle 2 sind die physikalischen Daten der vorstehend beschriebenen Wirkstoffe I und weiterer erfindungsgemäßer Verbindungen, die auf äühnliche Weise hergestellt wurden, aufgeführt:

**Tabelle 2**

| Nr. | R⁵ | Fp. [°C] |
|---|---|---|
| Ia.159 | OCH₂-CO-OCH₃ | Öl |
| Ia.169 | OCH(CH₃)-CO-OCH₃ (Racemat & R-Enantiomer) | Öl |
| Ia.362 | OH | 132-133 |
| Ia.363 | OCH₃ | 118-120 |
| Ia.374 | OCH₂-CH=CH₂ | Öl |
| Ia.381 | OCH₂-C≡CH | 110-112 |
| Ia.636 | OCH(CH₃)-CO-OCH₂-CH₂-OCH₃ (R-Enantiomer) | Öl |
| Ia.637 | OCH(CH₃)-CO-OCH₂-CH=CH₂ (R-Enantiomer) | Öl |

### Anwendungsbeispiele (herbizide Wirksamkeit)

Die herbizide Wirkung der substituierten 2-Phenylpyridine I ließ sich durch die folgenden Gewächshausversuche zeigen:

Als Kulturgefäße dienten Plastikblumentöpfe mit lehmigem Sand mit etwa 3,0 % Humus als Substrat. Die Samen der Testpflanzen wurden nach Arten getrennt eingesät.

Bei Vorauflaufbehandlung wurden die in Wasser suspendierten oder emulgierten Wirkstoffe direkt nach Einsaat mittels fein verteilender Düsen aufgebracht. Die Gefäße wurden leicht beregnet, um Keimung und Wachstum zu fördern, und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die Wirkstoffe beeinträchtigt wurde.

Zum Zweck der Nachauflaufbehandlung wurden die Testpflanzen je nach Wuchsform erst bis zu einer Wuchshöhe von 3 bis 15 cm angezogen und erst dann mit den in Wasser suspendierten oder emulgierten Wirkstoffen behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt. Die Aufwandmenge für die Nachauflaufbehandlung betrug 15,6 und 7,8 g/ha a.S.

Die Pflanzen wurden artenspezifisch bei Temperaturen von 10 bis 25°C bzw. 20 bis 35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.

Die in den Gewächshausversuchen verwendeten Pflanzen setzten sich aus folgenden Arten zusammen:

| Lateinischer Name | Deutscher Name | Englischer Name |
|---|---|---|
| Abutilon theophrasti | Chinesischer Hanf | velvet leaf |
| Amaranthus retroflexus | Zurückgekrümmter Fuchsschwanz | redroot pigweed |
| Chenopodium album | Weißer Gänsefuß | lambsquarters (goosefoot) |
| Ipomoea species | Windenarten | morningglory |
| Polygonum persicaria | Flohknöterich | redshank |

Bei Aufwandmengen von 15,6 und 7,8 g/ha a.S. zeigten die Verbindungen Nr. Ia.169, Ia.381 und Ia.636 (R-Enantiomer) sehr gute herbizide Wirkung gegen die o.g. Pflanzen.

### Anwendungsbeispiele (desikkative/defoliante Wirksamkeit)

Als Testpflanzen dienten junge, 4blättrige (ohne Keimblätter) Baumwollpflanzen, die unter Gewächshausbedingungen angezogen wurden (rel. Luftfeuchtigkeit 50 bis 70 %; Tag-/Nachttemperatur 27/20°C).

Die jungen Baumwollpflanzen wurden tropfnaß mit wäßrigen Aufbereitungen der Wirkstoffe (unter Zusatz von 0,15 Gew.-% des Fettalkoholalkoxylats Plurafac® LF 700 ²⁾, bezogen auf die Spritzbrühe) blattbehandelt. Die ausgebrachte Wassermenge betrug umgerechnet 1000 1/ha. Nach 13 Tagen wurde die Anzahl der abgeworfenen Blätter und der Grad der Entblätterung in % bestimmt.
²⁾ ein schaumarmes, nichtionisches Tensid der BASF AG

Bei den unbehandelten Kontrollpflanzen trat kein Blattfall auf.

## Patentansprüche

1. Substituierte 2-Phenylpyridine der Formel I 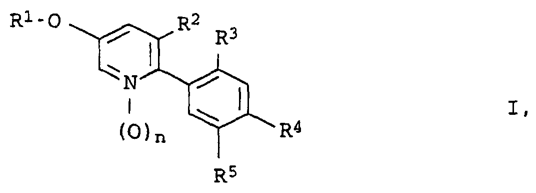 in der die Variablen folgende Bedeutungen haben:
n Null oder 1;
R¹ Aminosulfonyl, C₁-C₆-Alkylsulfinyl, C₁-C₆-Alkylsulfonyl oder C₁-C₆-Halogenalkylsulfonyl;
R²,R³ unabhängig voneinander Wasserstoff oder Halogen;
R⁴ Cyano, Hydroxy, Halogen, C₁-C₆-Alkoxy oder Phenylmethoxy, wobei der Phenylring unsubstituiert sein oder ein bis drei Substituenten tragen kann, jeweils ausgewählt aus der Gruppe bestehend aus Hydroxy, Halogen, C₁-C₆-Alkyl, C₁-C₆-Halogenalkyl, C₁-C₆-Alkoxy, C₁-C₆-Halogenalkoxy, Hydroxycarbonyl, (C₁-C₆-Alkoxy)-carbonyl und (C₁-C₆-Alkoxy)carbonyl-C₁-C₆-alkoxy;
R⁵ Wasserstoff, 1 Nitro, Cyano, Hydroxylamino, Halogen, C₁-C₆-Alkyl, C₁-C₆-Halogenalkyl, -COCl, -CO-OR⁶, -CO-N(R⁷)R⁸, -CO-O-(C₁-C₄-Alkylen)-CO-OR⁶, -CO-O-(C₁-C₄-Alkylen)-CO-N(R⁷)R⁸, -X¹-(C₁-C₄-Alkylen)-CO-R⁶, -X¹-(C₁-C₄-Alkylen)-CO-OR⁶, -X¹-(C₁-C₄-Alkylen)-CO-O-(C₁-C₄-Alkylen)-CO-OR⁶, -X¹-(C₁-C₄-Alkylen)-CO-N(R⁷)R⁸, -X¹-R⁹, -CH=C(R¹⁰)-CO-OR⁶, -CH=C(R¹⁰)-CO-O-(C₁-C₄-Alkylen)-CO-OR⁶, -CH=C(R¹⁰)-CO-N(R⁷)R⁸, Formyl, -CO-R⁶, 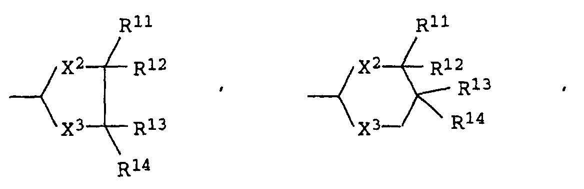 -C(R⁸)=N-OR¹⁵, -X¹-(C₁-C₄-Alkylen) -C(R⁸)=N-OR¹⁵, -CH=C(R¹⁰)-C(R⁸)=N-OR¹⁵, -CH(C₁-C₆-Alkoxy)₂, -N(R¹⁶)R¹⁷, -N(R¹⁶)-SO₂-(C₁-C₆-Alkyl), -N(R¹⁶)-CO-(C₁-C₆-Alkyl), Chlorsulfonyl, Hydroxysulfonyl oder -SO₂-N(R¹⁸)R¹⁹;
R⁶ Wasserstoff, C₁-C₆-Alkyl, C₁-C₆-Halogenalkyl, C₃-C₆-Alkenyl, C₃-C₆-Alkinyl, C₃-C₆-Cycloalkyl oder C₁-C₆-Alkoxy-C₁-C₆-alkyl;
R⁷ Wasserstoff oder C₁-C₆-Alkyl;
R⁸ Wasserstoff, Hydroxy, C₁-C₆-Alkyl, Hydroxycarbonyl-C₁-C₆-alkyl, (C₁-C₆-Alkoxy)carbonyl-C₁-C₆-alkyl, C₁-C₆-Alkoxy, C₁-C₆-Halogenalkoxy, Phenyl-C₁-C₆-alkoxy, C₃-C₆-Alkenyloxy oder C₃-C₆-Alkinyloxy;
R⁹ Wasserstoff, C₁-C₆-Alkyl, C₁-C₆-Halogenalkyl, C₃-C₆-Alkenyl, C₃-C₆-Alkinyl, C₃-C₆-Cycloalkyl oder C₁-C₆-Alkoxy-C₁-C₆-alkyl;
R¹⁰ Wasserstoff, Halogen oder C₁-C₆-Alkyl;
R¹¹-R¹⁴ unabhängig voneinander Wasserstoff, C₁-C₆-Alkyl oder (C₁-C₆-Alkoxy)carbonyl;
R¹⁵ Wasserstoff, C₁-C₆-Alkyl, Phenyl-C₁-C₆-alkyl, (C₁-C₆-Alkoxy)carbonyl-C₁-C₆-alkyl, C₃-C₆-Alkenyl oder C₃-C₆-Alkinyl;
R¹⁶ Wasserstoff oder C₁-C₆-Alkyl;
R¹⁷ Wasserstoff, C₁-C₆-Alkyl, Hydroxycarbonyl-C₁-C₆-alkyl, (C₁-C₆-Alkoxy)carbonyl-C₁-C₆-alkyl oder C₁-C₆-Alkoxy;
R¹⁸ Wasserstoff oder C₁-C₆-Alkyl;
R¹⁹ Wasserstoff, C₁-C₆-Alkyl, Hydroxycarbonyl-C₁-C₆-alkyl, (C₁-C₆-Alkoxy)carbonyl-C₁-C₆-alkyl oder C₁-C₆-Alkoxy;
X¹-X³ unabhängig voneinander Sauerstoff oder Schwefel;
sowie die landwirtschaftlich brauchbaren Salze der Verbindungen I mit R⁶ = Wasserstoff.

2. Substituierte 2-Phenylpyridine der Formel I und deren Salze, nach Anspruch 1, wobei
R⁵ für Wasserstoff, Nitro, Cyano, Hydroxylamino, C₁-C₆-Alkyl, C₁-C₆-Halogenalkyl, -COCl, -CO-OR⁶, -CO-O-(C₁-C₄-Alkylen)-CO-OR⁶, -O-(C₁-C₄-Alkylen)-CO-OR⁶, -O-(C₁-C₄-Alkylen)-CO-O-(C₁-C₄-Alkylen)-CO-OR⁶, -OR⁹, Formyl, -CH=N-OR¹⁵ oder -NH₂;
R⁶ für Wasserstoff, C₁-C₆-Alkyl, C₃-C₆-Alkenyl, C₃-C₆-Alkinyl oder C₁-C₆-Alkoxy-C₁-C₆-alkyl;
R⁹ für Wasserstoff, C₁-C₆-Alkyl, C₃-C₆-Alkenyl oder C₃-C₆-Alkinyl und
R¹⁵ für C₁-C₆-Alkyl stehen.

3. Verwendung der substituierten 2-Phenylpyridine der Formel I und der landwirtschaftlich brauchbaren Salze von I, gemäß Anspruch 1, als Herbizide oder zur Desikkation und/oder Defoliation von Pflanzen.

4. Herbizides Mittel, enthaltend eine herbizid wirksame Menge mindestens eines substituierten 2-Phenylpyridins der Formel I oder eines landwirtschaftlich brauchbaren Salzes von I, gemäß Anspruch 1, und mindestens einen inerten flüssigen und/oder festen Trägerstoff sowie gewünschtenfalls mindestens einen oberflächenaktiven Stoff.

5. Mittel zur Desikkation und/oder Defoliation von Pflanzen, enthaltend eine desikkant und/oder defoliant wirksame Menge mindestens eines substituierten 2-Phenylpyridins der Formel I oder eines landwirtschaftlich brauchbaren Salzes von I, gemäß Anspruch 1, und mindestens einen inerten flüssigen und/oder festen Trägerstoff sowie gewünschtenfalls mindestens einen oberflächenaktiven Stoff.

6. Verfahren zur Herstellung von herbizid wirksamen Mitteln, **dadurch gekennzeichnet, daß** man eine herbizid wirksame Menge mindestens eines substituierten 2-Phenylpyridins der Formel I oder eines landwirtschaftlich brauchbaren Salzes von I, gemäß Anspruch 1, und mindestens einen inerten flüssigen und/oder festen Trägerstoff sowie gewünschtenfalls mindestens einen oberflächenaktiven Stoff mischt.

7. Verfahren zur Herstellung von desikkant und/oder defoliant wirksamen Mitteln, **dadurch gekennzeichnet, daß** man eine desikkant und/oder defoliant wirksame Menge mindestens eines substituierten 2-Phenylpyridins der Formel I oder eines landwirtschaftlich brauchbaren Salzes von I, gemäß Anspruch 1, und mindestens einen inerten flüssigen und/oder festen Trägerstoff sowie gewünschtenfalls mindestens einen oberflächenaktiven Stoff mischt.

8. Verfahren zur Bekämpfung von unerwünschtem Pflanzenwuchs, **dadurch gekennzeichnet, daß** man eine herbizid wirksame Menge mindestens eines substituierten 2-Phenylpyridins der Formel I oder eines landwirtschaftlich brauchbaren Salzes von I, gemäß Anspruch 1, auf Pflanzen, deren Lebensraum oder auf Saatgut einwirken läßt.

9. Verfahren zur Desikkation und/oder Defoliation von Pflanzen, **dadurch gekennzeichnet, daß** man eine desikkant und/oder defoliant wirksame Menge mindestens eines substituierten 2-Phenylpyridins der Formel I oder eines landwirtschaftlich brauchbaren Salzes von I, gemäß Anspruch 1, auf Pflanzen einwirken läßt.

10. Verfahren nach Anspruch 9, **dadurch gekennzeichnet, daß** man Baumwolle behandelt.

11. Verfahren zur Herstellung von substituierten 2-Phenylpyridinen der Formel I gemäß Anspruch 1, bei denen n für 1 steht und R¹ und R⁵ keinen oxidierbaren Schwefel enthalten, **dadurch gekennzeichnet, daß** man die entsprechenden substituierten 2-Phenylpyridine, bei denen aber n Null bedeutet, in einem inerten Lösungs-/Verdünnungsmittel oxidiert.

12. Verfahren zur Herstellung von substituierten 2-Phenylpyridinen der Formel I gemäß Anspruch 1, **dadurch gekennzeichnet, daß** man ein 2-Halogenpyridin der Formel II 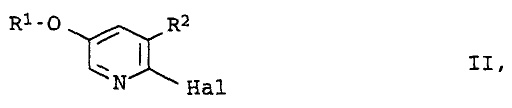 wobei Hal für Chlor oder Brom steht, in Gegenwart eines Übergangsmetallkatalysators mit einer metallorganischen Verbindung der Formel III 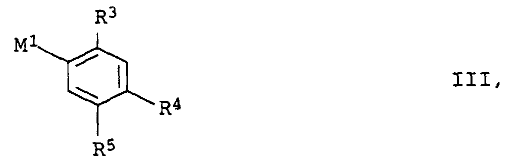 wobei M¹ für B(OH)₂, Mg-Cl, Mg-Br, Mg-J, Zn-Cl, Zn-Br, Zn-J, Lithium, Kupfer oder Zinntri(C₁-C₄-alkyl) steht,
oder mit einem Boroxin der Formel IV 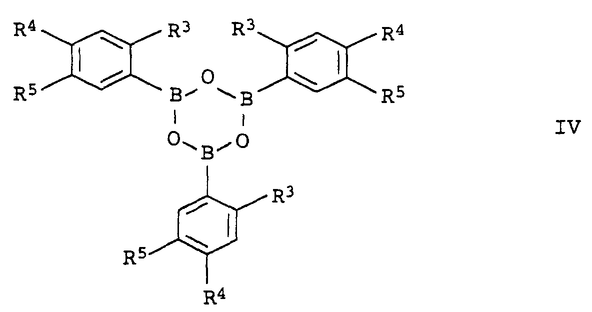 umsetzt.

13. Verfahren nach Anspruch 12, **dadurch gekennzeichnet, daß** man II mit einer metallorganischen Verbindung der Formel III umsetzt, wobei M¹ für B(OH)₂, Mg-Cl, Mg-Br, Mg-J, Zn-Cl, Zn-Br oder Zn-J steht.

14. 2-Halogenpyridine der Formel IIa 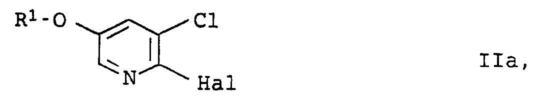 wobei Hal für Chlor oder Brom steht und R¹ die in Anspruch 1 angegebene Bedeutung hat.

## Claims

1. A substituted 2-phenylpyridine of the formula I 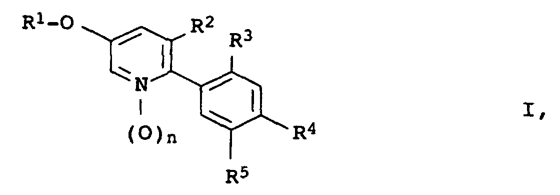 where:
n is zero or 1;
R¹ is aminosulfonyl, C₁-C₆-alkylsulfinyl, C₁-C₆-alkylsulfonyl or C₁-C₆-haloalkylsulfonyl;
R²,R³ independently of one another are hydrogen or halogen;
R⁴ is cyano, hydroxyl, halogen, C₁-C₆-alkoxy or phenylmethoxy, where the phenyl ring may be unsubstituted or may carry from one to three substituents, in each case selected from the group consisting of hydroxyl, halogen, C₁-C₆-alkyl, C₁-C₆-haloalkyl, C₁-C₆-alkoxy, C₁-C₆-haloalkoxy, hydroxycarbonyl, (C₁-C₆-alkoxy)carbonyl and (C₁-C₆-alkoxy)carbonyl-C₁-C₆-alkoxy;
R⁵ is hydrogen, nitro, cyano, hydroxylamino, halogen, C₁-C₆-alkyl, C₁-C₆-haloalkyl, -COCl, -CO-OR⁶, -CO-N(R⁷)R⁸, -CO-O-(C₁-C₄-alkylene)-CO-OR⁶, -CO-O-(C₁-C₄-alkylene)-CO-N(R⁷)R⁸, -X¹-(C₁-C₄-alkylene)-CO-R⁶, -X¹-(C₁-C₄-alkylene)-CO-OR⁶, -X¹-(C₁-C₄-alkylene)-CO-O-(C₁-C₄-alkylene)-CO-OR⁶, -X¹-(C₁-C₄-alkylene)-CO-N(R⁷)R⁸, -X¹-R⁹, -CH=C(R¹⁰)-CO-OR⁶, -CH=C(R¹⁰)-CO-O-(C₁-C₄-alkylene)-CO-OR⁶, -CH=C(R¹⁰)-CO-N(R⁷)R⁸, formyl, -CO-R⁶, 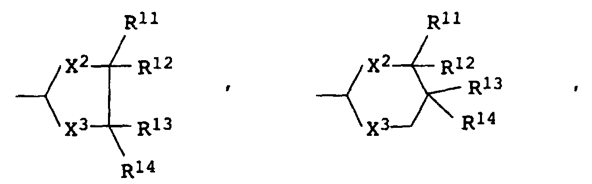 -C(R⁸)=N-OR¹⁵, -X¹-(C₁-C₄-alkylene)-C(R⁸)=N-OR¹⁵, -CH=C(R¹⁰)-C(R⁸)=N-OR¹⁵, -CH(C₁-C₆-alkoxy)₂, -N(R¹⁶)R¹⁷, -N(R¹⁶)-SO₂-(C₁-C₆-alkyl), -N(R¹⁶)-CO-(C₁-C₆-alkyl), chlorosulfonyl, hydroxysulfonyl or -SO₂-N(R¹⁸)R¹⁹;
R⁶ is hydrogen, C₁-C₆-alkyl, C₁-C₆-haloalkyl, C₃-C₆-alkenyl, C₃-C₆-alkynyl, C₃-C₆-cycloalkyl or C₁-C₆-alkoxy-C₁-C₆-alkyl;
R⁷ is hydrogen or C₁-C₆-alkyl;
R⁸ is hydrogen, hydroxyl, C₁-C₆-alkyl, hydroxycarbonyl -C₁-C₆-alkyl, (C₁-C₆-alkoxy)carbonyl-C₁-C₆-alkyl, C₁-C₆-alkoxy, C₁-C₆-haloalkoxy, phenyl-C₁-C₆-alkoxy, C₃-C₆-alkenyloxy or C₃-C₆-alkynyloxy;
R⁹ is hydrogen, C₁-C₆-alkyl, C₁-C₆-haloalkyl, C₃-C₆-alkenyl, C₃-C₆-alkynyl, C₃-C₆-cycloalkyl or C₁-C₆-alkoxy-C₁-C₆-alkyl;
R¹⁰ is hydrogen, halogen or C₁-C₆-alkyl;
R¹¹-R¹⁴ independently of one another are hydrogen, C₁-C₆-alkyl or (C₁-C₆-alkoxy)carbonyl;
R¹⁵ is hydrogen, C₁-C₆-alkyl, phenyl-C₁-C₆-alkyl, (C₁-C₆-alkoxy)carbonyl-C₁-C₆-alkyl, C₃-C₆-alkenyl or C₃-C₆-alkynyl;
R¹⁶ is hydrogen or C₁-C₆-alkyl;
R¹⁷ is hydrogen, C₁-C₆-alkyl, hydroxycarbonyl-C₁-C₆-alkyl, (C₁-C₆-alkoxy)carbonyl-C₁-C₆-alkyl or C₁-C₆-alkoxy;
R¹⁸ is hydrogen or C₁-C₆-alkyl;
R¹⁹ is hydrogen, C₁-C₆-alkyl, hydroxycarbonyl-C₁-C₆-alkyl, (C₁-C₆-alkoxy)carbonyl-C₁-C₆-alkyl or C₁-C₆-alkoxy;
X¹-X³ independently of one another are oxygen or sulfur;
and the agriculturally useful salts of the compounds I where R⁶ = hydrogen.

2. A substituted 2 phenylpyridine of the formula I and salts thereof, as claimed in claim 1, where
R⁵ is hydrogen, nitro, cyano, hydroxylamino, C₁-C₆-alkyl, C₁-C₆-haloalkyl, -COCl, -CO-OR⁶, -CO-O-(C₁-C₄-alkylene)-CO-OR⁶, -O-(C₁-C₄-alkylene)-CO-OR⁶, -O-(C₁-C₄-alkylene)-CO-O-(C₁-C₄-alkylene)-CO-OR⁶, -OR⁹, formyl, -CH=N-OR¹⁵ or -NH₂;
R⁶ is hydrogen, C₁-C₆-alkyl, C₃-C₆-alkenyl, C₃-C₆-alkynyl or C₁-C₆-alkoxy-C₁-C₆-alkyl;
R⁹ is hydrogen, C₁-C₆-alkyl, C₃-C₆-alkenyl or C₃-C₆-alkynyl and
R¹⁵ is C₁-C₆-alkyl.

3. The use of the substituted 2-phenylpyridines of the formula I and the agriculturally useful salts of I, as claimed in claim 1, as herbicides or for the desiccation and/or defoliation of plants.

4. A herbicidal composition, comprising a herbicidally effective amount of at least one substituted 2-phenylpyridine of the formula I or an agriculturally useful salt of I, as claimed in claim 1, and at least one inert liquid and/or solid carrier and also, if desired, at least one surfactant.

5. Composition for the desiccation and/or defoliation of plants, comprising an amount, such that it acts as a desiccant and/or defoliant, of at least one substituted 2-phenylpyridine of the formula I or an agriculturally useful salt of I, as claimed in claim 1, and at least one inert liquid and/or solid carrier and, if desired, at least one surfactant.

6. A process for the preparation of herbicidally effective compositions, which comprises mixing a herbicidally effective amount of at least one substituted 2-phenylpyridine of the formula I or an agriculturally useful salt of I, as claimed in claim 1, and at least one inert liquid and/or solid carrier and, if desired, at least one surfactant.

7. A process for the preparation of compositions which act as desiccants and/or defoliants, which comprises mixing an amount, such that it acts as a desiccant and/or defoliant, of at least one substituted 2-phenylpyridine of the formula I or an agriculturally useful salt of I, as claimed in claim 1, and at least one inert liquid and/or solid carrier and, if desired, at least one surfactant.

8. A method for controlling undesirable vegetation, which comprises allowing a herbicidally effective amount of at least one substituted 2-phenylpyridine of the formula I or an agriculturally useful salt of I, as claimed in claim 1, to act on plants, their habitat or on seeds.

9. A method for the desiccation and/or defoliation of plants, which comprises allowing an amount, such that it has a desiccant and/or defoliant action, of at least one substituted 2-phenylpyridine of the formula I or an agriculturally useful salt of I, as claimed in claim 1, to act on plants.

10. A process as claimed in claim 9, wherein cotton is treated.

11. A process for preparing substituted 2-phenylpyridines of the formula I as claimed in claim 1 where n is 1 and R¹ and R⁵ do not contain any oxidizable sulfur, which comprises oxidizing the appropriately substituted 2-phenylpyridines in which n is zero in an inert solvent/diluent.

12. A process for preparing substituted 2-phenylpyridines of the formula I as claimed in claim 1, which comprises reacting a 2-halopyridine of the formula II 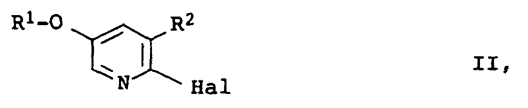 where Hal is chlorine or bromine, in the presence of a transition metal catalyst with an organometallic compound of the formula III 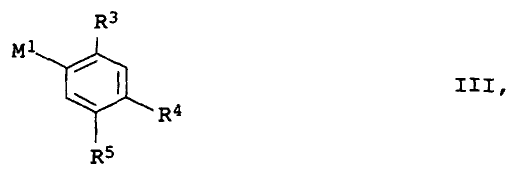 where M¹ is B(OH)₂, Mg-Cl, Mg-Br, Mg-I, Zn-Cl, Zn-Br, Zn-I, lithium, copper or tri(C₁-C₄-alkyl)tin,
or with a boroxine of the formula IV

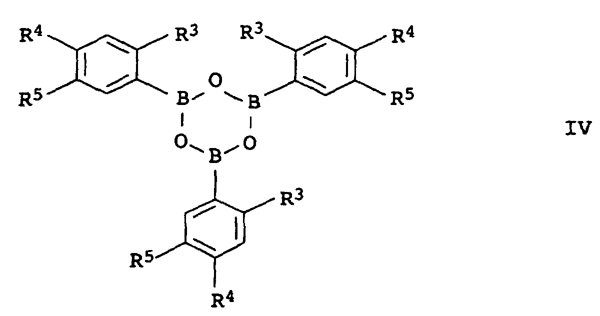

13. A process as claimed in claim 12, wherein II is reacted with an organometallic compound of the formula III where M¹ is B(OH)₂, Mg-Cl, Mg-Br, Mg-I, Zn-Cl, Zn-Br or Zn-I.

14. A 2-halopyridine of the formula IIa 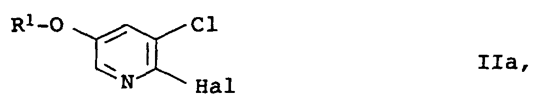 where Hal is chlorine or bromine and R¹ is as defined in claim 1.

## Revendications

1. 2-phénylpyridines substituées de formule I 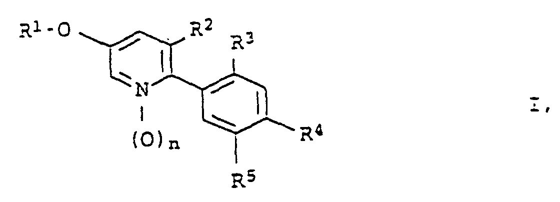 dans laquelle les symboles ont les significations suivantes
n : 0 ou 1 ;
R¹ : un groupe aminosulfonyle, alkylsulfinyle en C1-C6, alkylsulfonyle en C1-C6 ou halogénoalkylsulfonyle en C1-C6 ;
R², R³ chacun, indépendamment l'un de l'autre : l'hydrogène ou un halogène ;
R⁴ : un groupe cyano, hydroxy, un halogène, un groupe alcoxy en C1-C6 ou phénylméthoxy dont le cycle phényle est non substitué ou peut porter un à trois substituants choisis parmi les groupes hydroxy, les halogènes , les groupes alkyle en C1-C6, halogénoalkyle en C1-C6, alcoxy en C1-C6, halogénoalcoxy en C1-C6, hydroxycarbonyle (alcoxy en C1-C6)carbonyle et (alcoxy en C1-C6)carbonyl-alcoxy en C1-C6;
R⁵ : l'hydrogène, un groupe nitro, cyano, hydroxylamino, un halogène, un groupe alkyle en C1-C6, halogénoalkyle en C1-C6, -C0C1, -CO-OR⁶, -CO-N(R⁷)R⁸, -CO-O-alkylène en C1-C4 -CO-OR⁶, -X¹-alkylène en C1-C4-CO-R⁶, -X¹-(alkylène en C1-C4)-CO-OR⁶, -X¹-(alkylène en C1-C4)-CO-O-(alkylène en C1-C4)-CO-OR⁶, -X¹-(alkylène en C1-C4)-CO-N(R⁷-R⁹, -CH=C(R¹⁰)-CO-OR⁶, -CH=C(R¹⁰)-CO-O-(alkylène en C1-C4)-CO-OR⁶, -CH=C(R¹⁰-CO-N(R⁷)R⁸, formyle, -CO-R⁶, 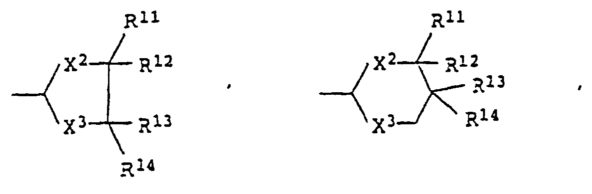 -C(R⁸)=N-OR¹⁵, -X¹(alkylène en C1-C4)-C(R⁸)=N-OR¹⁵, -CH=C(R¹⁰)-(R⁸=N-OR¹⁵, -CH-(alcoxy en C1 - C4)₂, -N(R¹⁶)R¹⁷,-N(R¹⁶)-SO₂-(alkyle en C1-C6), -N(R¹⁶)-CO-(alkyle en C1-C6), chlorosulfonyle, hydroxysulfonyle ou -SO₂-N(R¹⁸)R¹⁹;
R⁶ : l'hydrogène, un groupe alkyle en C1-C6, halogénoalkyle en C1-C6, alcényle en C3-C6, alcynyle en C3-C6, cycloalkyle en C3-C6 ou (alcoxy en C1-C6)alkyle en C1-C6 ;
R7 : l'hydrogène ou un groupe alkyle en C1-C6 ;
R⁸ : l'hydrogène, un groupe hydroxy, alkyle en C1-C6, hydroxycarbonyl-alkyle en C1-C6, (alcoxy en C1-C6)carbonyl-alkyle en C1-C6, alcoxy en C1-C6, halogénoalcoxy en C1-C6, phényl-alcoxy en C1-C6, alcényloxy en C3-C6 ou alcynyloxy en C3-C6 ;
R⁹ : l'hydrogène, un groupe alkyle en C1-C6, halogénoalkyle en C1-C6, alcényle en C3-C6, alcynyle en C3-C6, cycloalkyle en C3-C6 ou (alcoxy en C1-C6)alkyle en C1-C6;
R¹⁰ : l'hydrogène, un halogène ou un groupe alkyle en C1-C6 ;
R¹¹ à R¹⁴, chacun, indépendamment les uns des autres : l'hydrogène, un groupe alkyle en C1-C6 ou (alcoxy en C1-C6)carbonyle;
R15: l'hydrogène, un groupe alkyle en C1-C6, phényl-alkyle en C1-C6, (alcoxy en C1-C6)carbonyl-alkyle en C1-C6, alcényle en C3-C6 ou alcynyle en C3-C6 ;
R¹⁶: l'hydrogène ou un groupe alkyle en C1-C6;
R¹⁷: l'hydrogène, un groupe alkyle en C1-C6, hydroxycarbonyl-alkyle en C1-C6, (alcoxy en C1-C6)carbonyl-alkyle en C1-C6 ou alcoxy en C1-C6 ;
R¹⁸: l'hydrogène ou un groupe alkyle en C1-C6;
R¹⁹: l'hydrogène, un groupe alkyle en C1-C6, hydroxycarbonyl-alkyle en C1-C6, (alcoxy en C1-C6)carbonyl-alkyle en C1-C6 ou alcoxy en C1-C6 ;
X¹ à X³, chacun, indépendamment les uns des autres : l'oxygène ou le soufre ; ainsi que les sels des composés I pour lesquels R⁶ = hydrogène qui sont aptes aux applications agricoles.

2. 2-phénylpyridinessubstituées de formule I et leurs sels selon revendication 1, pour lesquels
R⁵ représente l'hydrogène, un groupe nitro, cyano, hydroxylamino, alkyle en C1-C6, halogénoalkyle en C1-C6, -C0C1, -CO-OR⁶, -CO-O-(alkylène en C1-C4)-CO-OR⁶, -O-(alkylène en C1-C4)-CO-OR⁶, -O-(alkylène en C1-C4)-CO-O-(alkylène en C1-C4) CO-OR 6, -OR 9, formule, -CH=N-OR¹⁵ ou -NH₂;
R⁶représente l'hydrogène, un groupe alkyle en C1-C6, alcényle en C3-C6, alcynyle en C3-C6 ou (alcoxy en C1-C6)alkyle en C1-C6 ;
R⁹représente l'hydrogène, un groupe alkyle en C1-C6, alcényle en C3-C6 ou alcynyle en C3-C6 et
R¹⁵ représente un groupe alkyle en C1-C6.

3. Utilisation des 2-phénylpyridines substituées de formule I et de leurs sels aptes aux applications agricoles selon la revendication 1 en tant qu'herbicides ou pour la dessiccation et/ou la défoliation de végétaux.

4. Produit herbicide contenant une quantité herbicide efficace d'au moins une 2-phénylpyridine substituée de formule I ou de l'un de ses sels_aptes aux applications agricoles selon la revendication 1 et au moins un véhicule liquide et/ou solide inerte et le cas échéant au moins une substance tensio-active.

5. Produit pour la dessiccation et/ou la défoliation de végétaux, contenant une quantité dessiccante et/ou défoliante efficace d'au moins une 2-phénylpyridine substituée de formule I ou de l'un de ses sels aptes aux applications agricoles selon la revendication 1 et au moins un véhicule liquide et/ou solide inerte ainsi que, le cas échéant, au moins une substance tensio-active.

6. Procédé pour la préparation de, produits à activité herbicide **caractérisé par le fait que** l'on mélange une quantité herbicide efficace d'au moins une 2-phénylpyridine substituée de formule I ou de l'un de ses sels aptes aux applications agricoles selon la revendication 1 et au moins un véhicule liquide et/ou solide inerte ainsi que, le cas échéant, au moins une substance tensio-active.

7. Procédé pour la préparation de produits à activité dessiccante et/ou défoliante **caractérisé par le fait que** l'on mélange une quantité dessiccante et/ou défoliante efficace d'au moins une 2-phénylpyridine substituée de formule I ou de l'un de ses sels aptes aux applications agricoles selon la revendication 1 et au moins un véhicule liquide et/ou solide inerte ainsi que, le cas échéant, au moins une substance tensio-active.

8. Procédé pour combattre les croissances de végétaux indésirables **caractérisé par le fait que** l'on fait agir une quantité herbicide efficace d'au moins une 2-phénylpyridine substituée de formule I ou de l'un de ses sels aptes aux applications agricoles selon la revendication 1 sur les végétaux, leur habitat ou sur les semences.

9. Procédé pour la dessiccation et/ou la défoliation de végétaux/**caractérisé par le fait que** l'on fait agir une quantité dessiccante et/ou défoliante efficace d'au moins une 2-phénylpyridine substituée de formule I ou de l'un de ses sels aptes aux applications agricoles selon revendication 1 sur les végétaux.

10. Procédé selon revendication 9, **caractérisé par le fait que** l'on traite du coton.

11. Procédé pour la préparation des 2-phénylpyridines substituées de formule I selon la revendication 1, pour lesquelles n est égal à 1 et R¹ et R⁵ ne contiennent pas de soufre oxydable, **caractérisé par le fait que** l'on oxyde les 2-phénylpyridines portant les substituants correspondants mais pour lesquelles n est égal à 0 dans un solvant / diluant inerte.

12. Procédé pour la préparation des 2-phénylpyridines substituées de formule-I selon la revendication 1, **caractérisé par le fait que** l'on fait réagir une 2-halogénopyridine de formule II 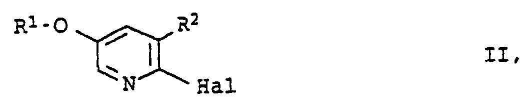 dans laquelle Hal représente le chlore ou le brome, en présence d'un catalyseur à base de métal de transition, avec un dérivé organométallique de formule III 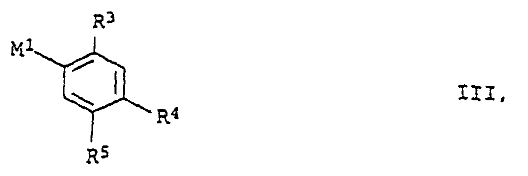 dans laquelle M¹ représente B(OH)₂, Mg-Cl, Mg,Br, Mg-I, Zn-Cl, Zn-Br, Zn-I, le lithium, le cuivre ou un groupe tri-(alkyle en C1-C4)étain, ou avec une boroxine de formule IV

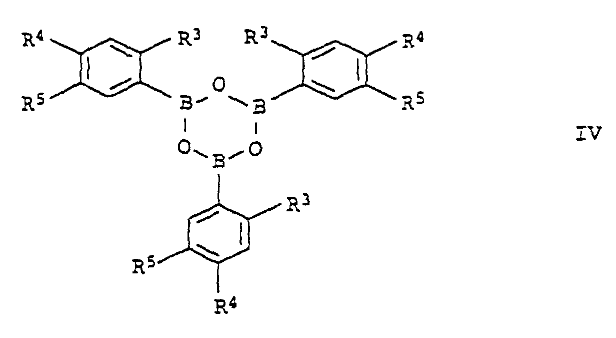

13. Procédé selon la revendication 12, **caractérisé par le fait que** l'on fait réagir II avec un dérivé organométallique de formule III dans laquelle M¹ représente B(OH)₂, Mg-Cl, Mg-Br, Mg-I, Zn-Cl, Zn-Br ou Zn-I.

14. 2-halogénopyridines de formule IIa 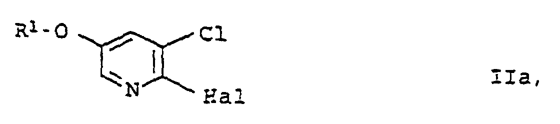 dans laquelle Hal représente le chlore ou le brome et R¹ a les significations indiquées dans la revendication 1.
